(19) **Europäisches Patentamt**
**European Patent Office**
**Office européen des brevets**

(11) **EP 4 625 020 A1**

(12) **EUROPEAN PATENT APPLICATION**
published in accordance with Art. 153(4) EPC

(43) Date of publication:
**01.10.2025 Bulletin 2025/40**

(21) Application number: **24771048.6**

(22) Date of filing: **18.01.2024**

(51) International Patent Classification (IPC):
*G02B 9/34* (2006.01)      *G02B 13/00* (2006.01)
*G02B 1/04* (2006.01)      *G03B 9/02* (2021.01)
*G02B 3/00* (2006.01)

(52) Cooperative Patent Classification (CPC):
**G02B 1/04; G02B 3/00; G02B 9/34; G02B 13/00;
G03B 9/02**

(86) International application number:
**PCT/KR2024/000911**

(87) International publication number:
**WO 2024/191046 (19.09.2024 Gazette 2024/38)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **10.03.2023 KR 20230031793
17.03.2023 KR 20230034925**

(71) Applicant: **Samsung Electronics Co., Ltd.
Suwon-si, Gyeonggi-do 16677 (KR)**

(72) Inventors:
• **KIM, Changkeun
Suwon-si Gyeonggi-do 16677 (KR)**
• **BAE, Jaecheol
Suwon-si Gyeonggi-do 16677 (KR)**

(74) Representative: **Gulde & Partner
Patent- und Rechtsanwaltskanzlei mbB
Berliner Freiheit 2
10785 Berlin (DE)**

(54) **LENS ASSEMBLY AND ELECTRONIC DEVICE COMPRISING SAME**

(57) According to an embodiment of the present disclosure, a lens assembly comprises: an image sensor; at least four plastic lenses sequentially arranged along an optical axis in a direction toward the image sensor, the lenses including a first lens having negative refractive power, a second lens having negative refractive power, a third lens having refractive power, and a fourth lens having negative refractive power; and an aperture disposed between the first lens and the second lens. In an embodiment, the lens assembly satisfies at least some of the conditions disclosed regarding the angle of view, the position of the aperture, the ratio of the effective diameter of the first lens with respect to the effective image height of the image sensor, the distortion rate, and the thickness or shape of the third lens, thereby facilitating miniaturization of the lens assembly and providing an expanded angle of view. In addition, various embodiments may be possible.

FIG. 5

**Description**

[Technical Field]

The embodiment(s) of the disclosure relates to a lens assembly, for example, a lens assembly including multiple lenses and an electronic device including the lens assembly.

[Background Art]

Optical devices, such as cameras capable of capturing images or videos, have been widely used. Recently, digital cameras and video cameras equipped with solid-state image sensors, such as charge-coupled devices (CCDs) or complementary metal-oxide semiconductor (CMOS) sensors, have become widespread. Optical devices that adopt solid image sensors (CCDs or CMOSs) are gradually replacing film-type optical devices because storing, copying, and moving images is easier compared to the film-type optical devices.

Recently, a plurality of optical devices (e.g., two or more selected from a close-up camera, a telephoto camera, and/or a wide-angle camera) have been equipped in a single electronic device to improve the quality of a captured image and to provide various visual effects to the captured image. For example, images of a subject may be acquired via a plurality of cameras having different optical characteristics, and the images may be synthesized so as to acquire a high-quality captured image. By being equipped with a plurality of optical devices (e.g., cameras) to acquire high-quality captured images, electronic devices such as mobile communication terminals and smartphones are gradually replacing electronic devices specialized for photographing functions, such as digital compact cameras. In the future, it is expected that the electronic devices such as mobile communication terminals and smartphones may replace high-performance cameras such as digital single-lens reflex (DSLR) digital cameras.

The above-described information may be provided as related art for the purpose of assisting in understanding the disclosure. None of the above contents make an assertion or decision as to whether any of the above might be applicable as prior art with regard to the disclosure.

[Detailed Description of the Invention]

[Technical Solution]

According to an embodiment of the disclosure, a lens assembly includes an image sensor and at least four plastic lenses sequentially arranged along an optical axis in a direction toward the image sensor. The plastic lenses include a first lens having a negative refractive power, a second lens having a negative refractive power, a third lens having a refractive power, a fourth lens having a negative refractive power, and an aperture disposed between the first lens and the second lens. In an embodiment, the lens assembly may satisfy Conditional Expressions 1 to 5 below.

$$[\text{Conditional Expression 1}]$$
$$FOV > 110 \text{ degrees}$$

$$[\text{Conditional Expression 2}]$$
$$TS/ST < 0.4$$

$$[\text{Conditional Expression 3}]$$
$$L1\_ape/ImgH < 0.60$$

$$[\text{Conditional Expression 4}]$$
$$-2.5\% < ((AD\_F7 - PD\_F7)/PD\_F7) * 100\% < 2.5\%$$

$$[\text{Conditional Expression 5}]$$
$$-25.0\% < ((AD\_F10 - PD\_F10)/PD\_F10) * 100\% < 25.0\%$$

Here, "FOV" may denote a field of view of the lens assembly, "TS" may denote a distance from an object-side surface of the first lens to the aperture, "ST" may denote a distance from the aperture to a sensor-side surface of the fourth lens, "L1_ape" may denote an effective diameter of the first lens, "ImgH" may denote an effective image height of the image sensor, "AD_F7" may denote a distance up to 0.7F of an actual light-received area on an imaging plane of the image sensor, "PD_F7" may denote a distance up to 0.7F of a predicted distance PD on the imaging plane of the image sensor, "AD_F10" may denote a distance up to 1.0F of the actual light-received area on the imaging plane of the image sensor, and "PD_F10" may denote a distance up to 1.0F of the predicted distance on the imaging plane of the image sensor.

According to an embodiment of the disclosure, a lens assembly includes an image sensor and at least four plastic lenses sequentially arranged along an optical axis in a direction toward the image sensor. The plastic lenses include a first lens having a negative refractive power, a second lens having a negative refractive power, a third lens having a refractive power, a fourth lens having a negative refractive power, and an aperture disposed between the first lens and the second lens. In an embodiment, the lens assembly may satisfy Conditional Expressions 1, 3, 6, and 7 below.

$$[\text{Conditional Expression 1}]$$
$$FOV > 110 \text{ degrees}$$

$$[\text{Conditional Expression 3}]$$
$$L1\_ape/ImgH < 0.60$$

$$[\text{Conditional Expression 6}]$$
$$T3/TA > 0.34$$

$$[\text{Conditional Expression 7}]$$
$$0.7 < T3/(T1 + T2 + T4)$$

Here, "FOV" may denote a field of view of the lens assembly, "L1_ape" may denote an effective diameter of the first lens, "ImgH" may denote an effective image height of the image sensor, "TA" may denote a distance from an object-side surface of the first lens to a sensor-side surface of the fourth lens, "T1" may denote a thickness of the first lens, "T2" may denote a thickness of the second lens, "T3" may denote a thickness of the third lens, and "T4" may denote a thickness of the fourth lens.

According to an embodiment of the disclosure, an electronic device includes a lens assembly and a processor configured to acquire an image of a subject using the lens assembly. In an embodiment, a lens assembly includes an image sensor and at least four plastic lenses sequentially arranged along an optical axis in a direction toward the image sensor. The plastic lenses include a first lens having a negative refractive power, a second lens having a negative refractive power, a third lens having a refractive power, a fourth lens having a negative refractive power, and an aperture disposed between the first lens and the second lens. In an embodiment, the electronic device and/or the lens assembly may satisfy Conditional Expressions 2, 3, 6, and 7 below.

$$[\text{Conditional Expression 2}]$$
$$TS/ST < 0.4$$

$$[\text{Conditional Expression 3}]$$
$$L1\_ape/ImgH < 0.60$$

$$[\text{Conditional Expression 6}]$$
$$T3/TA > 0.34$$

$$[\text{Conditional Expression 7}]$$
$$0.7 < T3/(T1 + T2 + T4)$$

Here, "TS" may denote a distance from an object-side surface of the first lens to the aperture, "ST" may denote a distance from the aperture to a sensor-side surface of the fourth lens, "L1_ape" may denote an effective diameter of the first lens, "ImgH" may denote an effective image height of the image sensor, "TA" may denote a distance from an object-side surface of the first lens to a sensor-side surface of the fourth lens, "T1" may denote a thickness of the first lens, "T2" may denote a thickness of the second lens, "T3" may denote a thickness of the third lens, and "T4" may denote a thickness of the fourth lens.

According to an embodiment of the disclosure, the electronic device may include any one of the above-described lens assemblies, a processor, and memory configured to store instructions that, when executed by the processor, cause the electronic device to acquire an image of a subject using the lens assembly.

[Brief Description of Drawings]

The above and other aspects, features, and/or advantages of an embodiment of the disclosure will be more apparent from the following detailed description taken with reference to the accompanying drawings.

FIG. 1 is a block diagram illustrating an electronic device in a network environment according to an embodiment of the disclosure.

FIG. 2 is a block diagram exemplifying a camera module according to an embodiment of the disclosure.

FIG. 3 is a front perspective view of an electronic device according to an embodiment of the disclosure.

FIG. 4 is a perspective view illustrating the electronic device of FIG. 3 according to an embodiment of the disclosure, viewed from the rear side.

FIG. 5 is a view illustrating a lens assembly according to an embodiment of the disclosure.

FIG. 6 is a graph showing spherical aberration of the lens assembly of FIG. 5 according to an embodiment of the disclosure.

FIG. 7 is a graph showing astigmatism of the lens assembly of FIG. 5 according to an embodiment of the disclosure.

FIG. 8 is a graph showing distortion rate of the lens assembly of FIG. 5 according to an embodiment of the disclosure.

FIG. 9 is a view illustrating a lens assembly according to an embodiment of the disclosure.

FIG. 10 is a graph showing spherical aberration of the lens assembly of FIG. 9 according to an embodiment of the disclosure.

FIG. 11 is a graph showing astigmatism of the lens assembly of FIG. 9 according to an embodiment of the disclosure.

FIG. 12 is a graph showing distortion rate of the lens assembly of FIG. 9 according to an embodiment of the disclosure.

FIG. 13 is a view illustrating a lens assembly according to an embodiment of the disclosure.

FIG. 14 is a graph showing spherical aberration of the lens assembly of FIG. 13 according to an embodiment of the disclosure.

FIG. 15 is a graph showing astigmatism of the lens assembly of FIG. 13 according to an embodiment of the disclosure.

FIG. 16 is a graph showing distortion rate of the lens assembly of FIG. 13 according to an embodiment of the disclosure.

FIG. 17 is a view illustrating a lens assembly according to an embodiment of the disclosure.

FIG. 18 is a graph showing spherical aberration of the lens assembly of FIG. 17 according to an embodiment of the disclosure.

FIG. 19 is a graph showing astigmatism of the lens assembly of FIG. 17 according to an embodiment of the disclosure.

FIG. 20 is a graph showing distortion rate of the lens assembly of FIG. 17 according to an embodiment of the disclosure.

Throughout the appended drawings, like reference numerals may be assigned to like components, configurations, and/or structures.

[Mode for Carrying out the Invention]

As mentioned above, a single miniaturized electronic device may include a standard camera, a wide-angle (or ultra-wide-angle) camera, a close-up camera, and/or a telephoto camera to acquire multiple images of a single subject, synthesize the images, and acquire a high-quality image. A camera or lens assembly may be classified as a standard camera, a wide-angle (or ultra-wide-angle) camera, a close-up camera, and/or a telephoto camera according to its field of view (or focal length). When the effective diameter of the first object-side lens is sufficiently large, it may be easier to implement a wide-angle (or ultra-wide-angle) camera. However, as the number of lens assemblies mounted in a single electronic device increases, it may become difficult to ensure wide-angle (or ultra-wide-angle) performance in the camera or electronic device. For example, as a plurality of lens assemblies are arranged in a miniaturized electronic device, there may be limitations in securing the effective diameter of the first object-side lens. When the effective diameter of the first object-side lens is increased to secure wide-angle (or ultra-wide-angle) performance, the wide-angle (or ultra-wide-angle) camera may have difficulty in harmonizing with the external design of the electronic device. For example, as the effective diameter of the first object-side lens of the wide-angle (or ultra-wide-angle) camera becomes larger than those of other cameras, the appearance of the electronic device in a multi-camera arrangement may be degraded, and there may be limitations in placing it adjacent to other cameras.

The embodiments of the disclosure are intended to at least resolve the above-mentioned problems and/or disadvantages and to at least provide the advantages described below by providing a lens assembly capable of implementing ultra-wide-angle characteristics while being miniaturized, and/or an electronic device including the lens assembly.

The embodiments of the disclosure may provide a lens assembly that offers ultra-wide-angle characteristics while being easily placed adjacent to other cameras.

The technical subjects pursued in the disclosure may not be limited to the above-mentioned technical subjects, and other technical subjects which are not mentioned may be clearly understood from the following descriptions by those skilled in the art to which the disclosure pertains.

The following description made with reference to the accompanying drawings may provide an understanding of various exemplary implementations of the disclosure including the claims and equivalents thereof. An exemplary embodiment set forth in the following description includes various particular details to help the understanding, but is considered one of various exemplary embodiments. Therefore, it will be apparent to those skilled in the art that various changes and modifications may be made to various implementations described herein without departing from the scope and technical idea of the disclosure. In addition, descriptions of well-known functions and configurations may be omitted for clarity and brevity.

The terms and words used in the following description and claims are not limited to bibliographical meanings, but may be used to clearly and consistently describe the various embodiments set forth herein. Therefore, it will be apparent to those skilled in the art that the following description of various implementations of the disclosure is provided only for the purpose of explanation, rather than for the purpose of limiting the disclosure defined as the scope of protection and equivalents thereto.

It should be appreciated that a singular form such as "a," "an," or "the" also includes the meaning as a plural form, unless the context clearly indicates otherwise. Therefore, for example, "a component surface" may mean one or more of component surfaces.

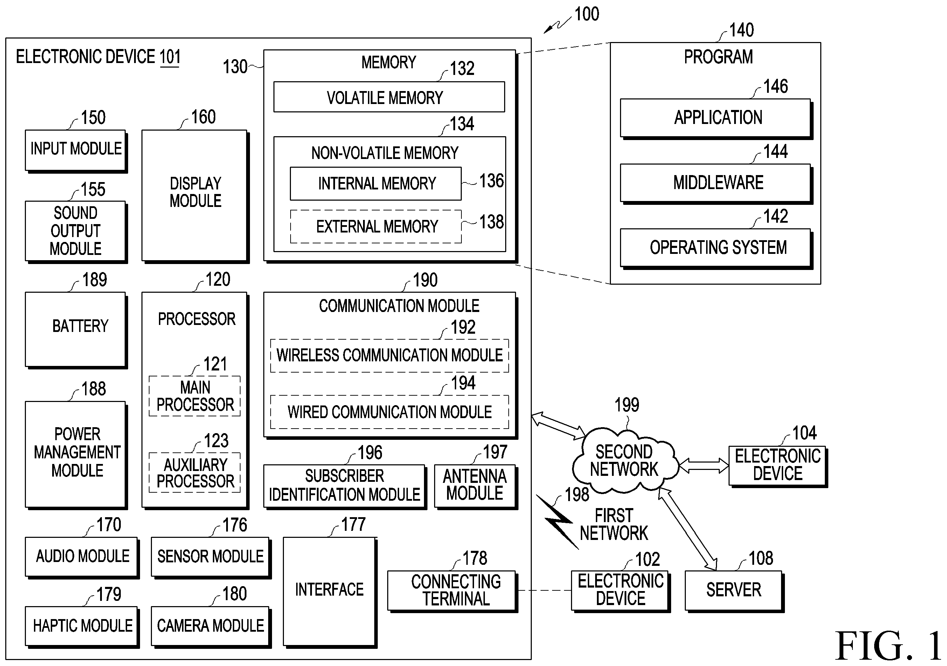

FIG. 1 is a block diagram illustrating an electronic device 101 in a network environment 100 according to an embodiment of the disclosure. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the nonvolatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth™, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to an embodiment, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

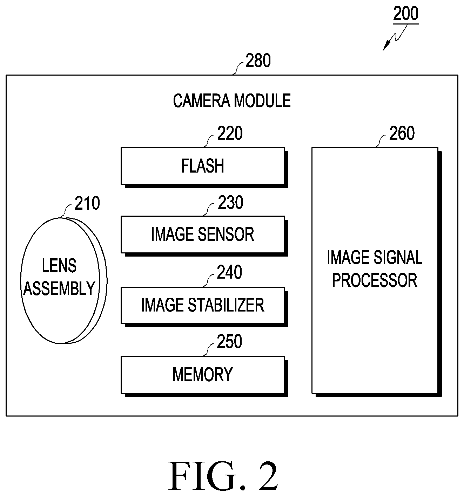

FIG. 2 is a block diagram 200 illustrating the camera module 280 (e.g., the camera module 180 of FIG. 1) according to an embodiment of the disclosure. Referring to FIG. 2, the camera module 280 may include a lens assembly 210, a flash 220, an image sensor 230, an image stabilizer 240, a memory 250 (e.g., buffer memory), or an image signal processor 260. According to an embodiment, the lens assembly 210 may include the image sensor 230. The lens assembly 210 may collect light emitted or reflected from an object whose image is to be taken. The lens assembly 210 may include one or more lenses. According to an embodiment, the camera module 280 may include a plurality of lens assemblies 210. In such a case, the camera module 280 may form, for example, a dual camera, a 360-degree camera, or a spherical camera. Some of the plurality of lens assemblies 210 may have the same lens attribute (e.g., view angle, focal length, auto-focusing, f number, or optical zoom), or at least one lens assembly may have one or more lens attributes different from those of another lens assembly. The lens assembly 210 may include, for example, a wide-angle lens or a telephoto lens.

The flash 220 may emit light that is used to reinforce light reflected from an object. According to an embodiment, the flash 220 may include one or more light emitting diodes (LEDs) (e.g., a red-green-blue (RGB) LED, a white LED, an infrared (IR) LED, or an ultraviolet (UV) LED) or a xenon lamp. The image sensor 230 may obtain an image corresponding to an object by converting light emitted or reflected from the object and transmitted via the lens assembly 210 into an electrical signal. According to an embodiment, the image sensor 230 may include one selected from image sensors having different attributes, such as a RGB sensor, a black-and-white (BW) sensor, an IR sensor, or a UV sensor, a plurality of image sensors having the same attribute, or a plurality of image sensors having different attributes. Each image sensor included in the image sensor 230 may be implemented using, for example, a charged coupled device (CCD) sensor or a complementary metal oxide semiconductor (CMOS) sensor.

The image stabilizer 240 may move the image sensor 230 or at least one lens included in the lens assembly 210 in a particular direction, or control an operational attribute (e.g., adjust the read-out timing) of the image sensor 230 in response to the movement of the camera module 280 or the electronic device 201 including the camera module 280. This allows compensating for at least part of a negative effect (e.g., image blurring) by the movement on an image being captured. According to an embodiment, the image stabilizer 240 may sense such a movement by the camera module 280 or the electronic device (e.g., the electronic device 101 of FIG. 1) using a gyro sensor (not shown) or an acceleration sensor (not shown) disposed inside or outside the camera module 280. According to an embodiment, the image stabilizer 240 may be implemented, for example, as an optical image stabilizer. The memory 250 may store, at least temporarily, at least part of an image obtained via the image sensor 230 for a subsequent image processing task. For example, if image capturing is delayed due to shutter lag or multiple images are quickly captured, a raw image obtained (e.g., a Bayer-patterned image, a high-resolution image) may be stored in the memory 250, and its corresponding copy image (e.g., a low-resolution image) may be previewed via the display device 160 of the FIG. 1. Thereafter, if a specified condition is met (e.g., by a user's input or system command), at least part of the raw image stored in the memory 250 may be obtained and processed, for example, by the image signal processor 260. According to an embodiment, the memory 250 may be configured as at least part of the memory (e.g., the memory 130 of FIG. 1) or as a separate memory that is operated independently from the memory 130.

The image signal processor 260 may perform one or more image processing with respect to an image obtained via the image sensor 230 or an image stored in the memory 250. The one or more image processing may include, for example, depth map generation, three-dimensional (3D) modeling, panorama generation, feature point extraction, image synthesizing, or image compensation (e.g., noise reduction, resolution adjustment, brightness adjustment, blurring, sharpening, or softening). Additionally or alternatively, the image signal processor 260 may perform control (e.g., exposure time control or read-out timing control) with respect to at least one (e.g., the image sensor 230) of the components included in the camera module 280. An image processed by the image signal processor 260 may be stored back in the memory 250 for further processing, or may be provided to an external component (e.g., the memory 130, the display device 160, the electronic device 102, the electronic device 104, or the server 108 of FIG. 1) outside the camera module 280. According to an embodiment, the image signal processor 260 may be configured as at least part of the processor (e.g., the processor 120 of FIG. 1), or as a separate processor that is operated independently from the processor 120. If the image signal processor 260 is configured as a separate processor from the processor 120, at least one image processed by the image signal processor 260 may be displayed, by the processor 120, via the display device 160 as it is or after being further processed.

According to an embodiment, the electronic device (e.g., the electronic device 101 of FIG. 1) may include a plurality of camera modules 280 having different attributes or functions. In such a case, at least one of the plurality of camera modules 280 may form, for example, a wide-angle camera and at least another of the plurality of camera modules280 may form a telephoto camera. Similarly, at least one of the plurality of camera modules 280 may form, for example, a front camera and at least another of the plurality of camera modules280 may form a rear camera.

The electronic device according to an embodiment may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that an embodiment of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program) including one or more instructions that are stored in a storage medium (e.g., internal memory or external memory) that is readable by a machine (e.g., the electronic device). For example, a processor (e.g., the processor) of the machine (e.g., the electronic device) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore™), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to an embodiment, each component (e.g., a module or a program) of the above-described components may include a single entity or multiple entities, and some of the multiple entities may be separately disposed in different components. According to an embodiment, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to a an embodiment, operations performed by the module, the program, or another component may be carried out sequentially, in parallel, repeatedly, or heuristically, or one or more of the operations may be executed in a different order or omitted, or one or more other operations may be added.

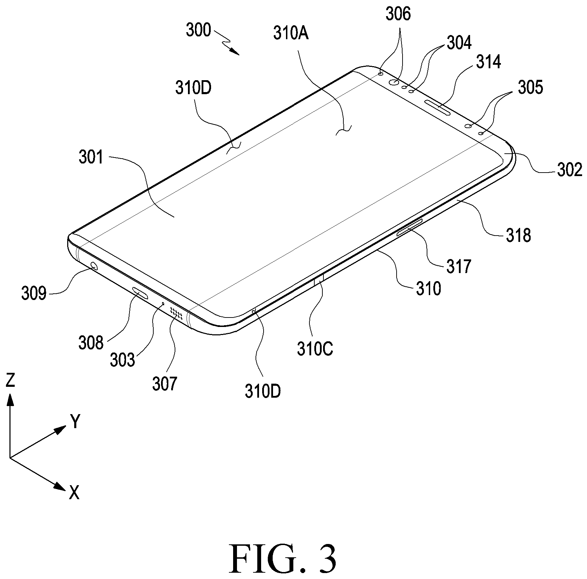

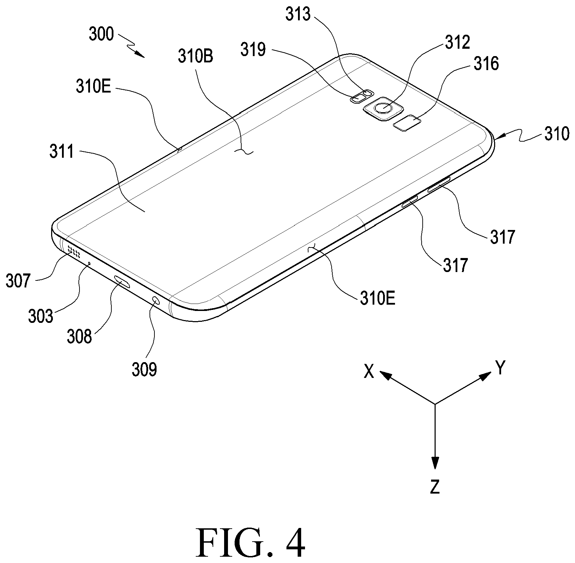

FIG. 3 is a front perspective view of an electronic device 101 (e.g., the electronic device 101 in FIG. 1) according to an embodiment of the disclosure. FIG. 4 is a rear perspective view of the electronic device 300 of FIG. 3 according to an embodiment of the disclosure.

Referring to FIGS. 3 and 4, the electronic device 300 (e.g., the electronic device 101 in FIG. 1) according to an embodiment may include a housing 310 including a first surface (or a front surface) 310A, a second surface (or a rear surface) 310B, and a side surface 310C surrounding a space between the first surface 310A and the second surface 310B. In an embodiment (not illustrated), the housing 310 may refer to a structure that defines some of the first surface 310A, the second surface 310B, and the side surface 310C of FIG. 3. According to an embodiment, at least a portion of the first surface 310A may be defined by a substantially transparent front plate 302 (e.g., a glass plate or a polymer plate including various coating layers). In an embodiment, the front plate 302 may be coupled to the housing 310 to define an inner space together with the housing 310. In an embodiment, the term "inner space" may refer to the inner space of the housing 310 that accommodates at least a portion of a display 301 to be described later or the display module 160 in FIG. 1.

According to an embodiment, the second surface 310B may be defined by a substantially opaque rear plate 311. The rear plate 311 may be made of, for example, coated or colored glass, ceramic, polymer, metal (e.g., aluminum, stainless steel (STS), or magnesium), or a combination of two or more of these materials. The side surface 310C may be defined by a side surface bezel structure (or a "side surface member") 318 coupled to the front plate 302 and the rear plate 311 and including metal and/or polymer. In an embodiment, the rear plate 311 and the side surface bezel structure 318 may be integrated and may include the same material (e.g., a metal material such as aluminum).

In the illustrated embodiment, the front plate 302 may include, at the long opposite side edges thereof, two first areas 310D, which are bent from the first surface 310A toward the rear plate 311 and extend seamlessly. In the illustrated embodiment (see FIG. 4), the rear plate 311 may include, at the long opposite side edges thereof, two second areas 310E, which are bent from the second surface 310B toward the front plate 302 and extend seamlessly. In an embodiment, the front plate 302 (or the rear plate 311) may include only one of the first areas 310D (or the second areas 310E). In an embodiment, some of the first areas 310D and the second areas 310E may not be included. In the above-described embodiments, when viewed from a side of the electronic device 300, the side bezel structure 318 may have a first thickness (or width) on the side surface in which the first areas 310D or the second areas 310E are not included (e.g., the side surface in which the connector hole 308 is disposed), and may have a second thickness, which is smaller than the first thickness, on the side surface in which the first areas 310D or the second areas 310E are included (e.g., the side surfaces in which the key input devices 317 are disposed).

According to an embodiment, the electronic device 300 may include at least one of a display 301, audio modules 303, 307, and 314, sensor modules 304, 316, and 319, camera modules 305, 312, and 313 (e.g., the camera modules 180 and 280 in FIG. 1 or 2), key input devices 317, light-emitting elements 306, and connector holes 308 and 309. In an embodiment, the electronic device 300 may omit at least one of the components (e.g., the key input devices 317 or the light-emitting element 306) or additionally include other components.

The display 301 (e.g., the display module 160 of FIG. 1) may be visually exposed through a substantial portion of a front plate 302. In an embodiment, at least a portion of the display 301 may be visually exposed through the front plate 302, which defines the first surface 310A and the first area 310D of the side surface 310C. In an embodiment, the periphery of the display 301 may have substantially the same shape as the peripheral shape of the front plate 302 adjacent thereto. In an embodiment (not illustrated), the distance between the periphery of the display 301 and the periphery of the front plate 302 may be substantially constant in order to enlarge the visually exposed area of the display 301.

In an embodiment (not illustrated), recesses or openings may be provided in a portion of a screen display area (e.g., an active area) of the display 301 or an area out of the screen display area (e.g., an inactive area), and at least one of audio modules 314 (e.g., the audio module 170 in FIG. 1), sensor modules 304 (e.g., the sensor module 176 in FIG. 1), camera modules 305, and light-emitting elements 306 may be aligned with the recesses or the openings. In another embodiment (not illustrated), the rear surface of the screen display area of the display 301 may include at least one of the audio module 314, the sensor modules 304, the camera modules 305 (e.g., an under-display camera (UDC)), a fingerprint sensor 316, and the light-emitting elements 306. In an embodiment (not illustrated), the display 301 may be coupled to or disposed adjacent to a touch-sensitive circuit, a pressure sensor capable of measuring a touch intensity (pressure), and/or a digitizer configured to detect an electromagnetic field-type stylus pen. In an embodiment, at least some of the sensor modules 304 and 319 and/or at least some of the key input devices 317 may be disposed in the first areas 310D and/or the second areas 310E.

The audio modules 303, 307, and 314 may include a microphone hole 303 and speaker holes 307 and 314. A microphone configured to acquire external sound may be placed inside the microphone hole 303, and in an embodiment, multiple microphones may be placed to detect the direction of sound. The speaker holes 307 and 314 may include an external speaker hole 307 and a communication receiver hole 314. In an embodiment, the speaker holes 307 and 314 and the microphone hole 303 may be implemented as a single hole, or a speaker (e.g., a piezo speaker) may be included without the speaker holes 307 and 314.

The sensor modules 304, 316, and 319 may generate electrical signals or data values corresponding to an internal operating state or an external environmental state of the electronic device 300. The sensor modules 304, 316, and 319 may include, for example, a first sensor module 304 (e.g., a proximity sensor), a second sensor module (not illustrated) (e.g., a fingerprint sensor) disposed on the first surface 310A of the housing 310, a third sensor module 319 (e.g., an HRM sensor), and/or a fourth sensor module 316 (e.g., a fingerprint sensor) disposed on the second surface 310B of the housing 310. The fingerprint sensor may be disposed not only on the first surface 310A (e.g., the display 301) of the housing 310, but also on the second surface 310B. The electronic device 300 may further include at least one of sensor modules (not illustrated), such as a gesture sensor, a gyro sensor, an atmospheric pressure sensor, a magnetic sensor, an acceleration sensor, a grip sensor, a color sensor, an infrared (IR) sensor, a biometric sensor, a temperature sensor, a humidity sensor, or an illuminance sensor.

The camera modules 305, 312, and 313 may include a first camera device 305 disposed on the first surface 310A of the electronic device 300, and a second camera device 312 and/or a flash 313 disposed on the second surface 310B. The camera modules 305 and 312 may include one or more lenses, an image sensor, and/or an image signal processor. The flash 313 may include, for example, a light-emitting diode or a xenon lamp. In an embodiment, two or more lenses (e.g., an infrared camera lens, a wide-angle lens, and a telephoto lens) and image sensors may be disposed on one surface of the electronic device 300.

The key input devices 317 may be disposed on the side surface 310C of the housing 310. In an embodiment, the electronic device 300 may not include some or all of the above-mentioned key input devices 317, and key input devices 317, which are not included, may be implemented in another form, such as soft keys, on the display 301. In an embodiment, the key input devices may include a sensor module 316 disposed on the second surface 310B of the housing 310.

The light-emitting element 306 may be disposed, for example, on the first surface 310A of the housing 310. The light-emitting element 306 may provide, for example, the state information of the electronic device 300 in an optical form. In an embodiment, the light-emitting element 306 may provide, for example, a light source that operates in conjunction with the camera module 305. The light-emitting element 306 may include, for example, an LED, an IR LED, and a xenon lamp.

The connector holes 308 and 309 may include a first connector hole 308 capable of accommodating a connector (e.g., a USB connector) configured to transmit/receive power and/or data to/from an external electronic device, and/or a second connector hole (e.g., an earphone jack) 309 capable of accommodating a connector configured to transmit/receive an audio signal to/from an external electronic device.

In reviewing the following embodiments, the above-described electronic devices 101, 102, 104, and 300 and/or camera modules 180, 280, 305, 312, and 313 may be referenced. The lens assemblies 400, 500, 600, and 700 of the embodiments described below may implement at least a part or the entirety of at least one of the above-described camera modules 180, 280, 305, 312, and 313.

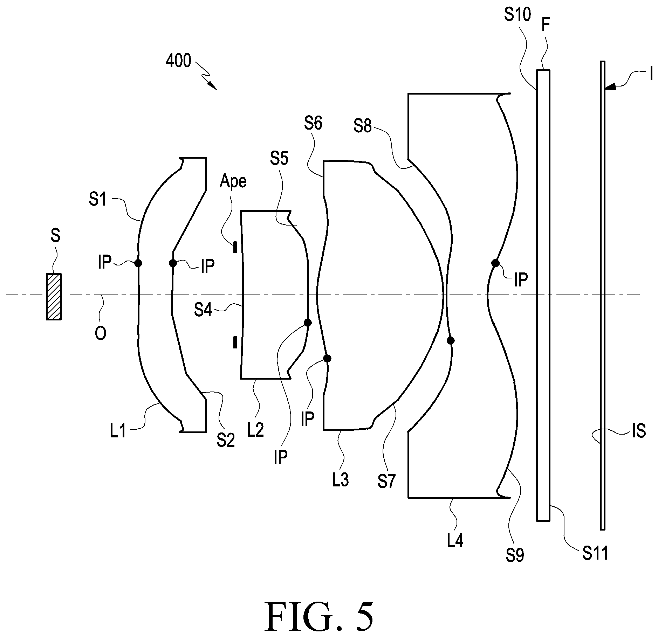

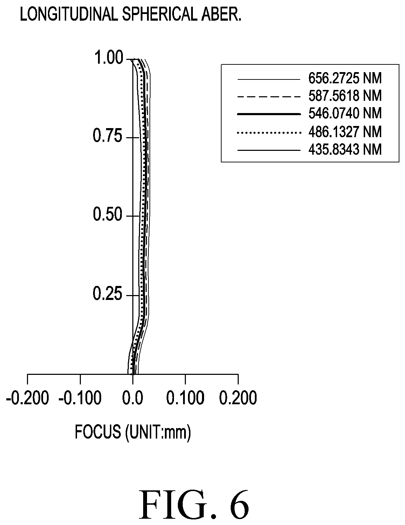

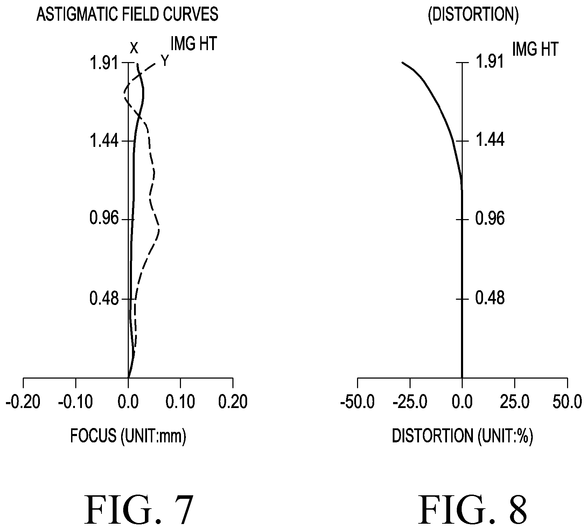

FIG. 5 is a view illustrating a lens assembly 400 according to an embodiment of the disclosure. FIG. 6 is a graph showing spherical aberration of the lens assembly 400 of FIG. 5 according to an embodiment of the disclosure. FIG. 7 is a graph showing astigmatism of the lens assembly 400 of FIG. 5 according to an embodiment of the disclosure. FIG. 8 is a graph showing distortion rate of the lens assembly 400 of FIG. 5 according to an embodiment of the disclosure.

FIG. 6 is a graph illustrating spherical aberration of a lens assembly 400 according to an embodiment of the disclosure, in which the horizontal axis represents the coefficient of longitudinal spherical aberration, and the vertical axis represents the normalized distance from the optical axis. The variation in longitudinal spherical aberration depending on the wavelength of light is illustrated. The longitudinal spherical aberration is illustrated for light with wavelengths of, for example, 656.2725 nm (e.g., red), 587.5618 nm (e.g., yellow), 546.0740 nm, 486.1372 nm (e.g., blue), and 435.8343 nm, respectively. FIG. 7 is a graph illustrating astigmatism of the lens assembly 400 according to an embodiment of the disclosure for light with a wavelength of 546.0740 nm. The sagittal plane, indicated by "X", is represented by a solid line, and the tangential plane (or meridional plane), indicated by "Y" is represented by a dashed line. FIG. 8 is a graph illustrating distortion of the lens assembly 400 according to an embodiment of the disclosure for light with a wavelength of 546.0740 nm.

Referring to FIGS. 5 to 8, a lens assembly 400 (e.g., the lens assembly 210 of FIG. 2) according to one of various embodiments of the disclosure may include an image sensor I or 230 and at least four lenses L1, L2, L3, and L4. In an embodiment, the at least four lenses L1, L2, L3, and L4 may include a first lens L1, a second lens L2, a third lens L3, and/or a fourth lens L4, which are sequentially arranged along an optical axis O from a subject S side toward the image sensor I or 230. In the following detailed description, the first lens L1 may be referred to as an "object-side first lens," and the fourth lens L4 may be referred to as a "sensor-side first lens." In an embodiment, the phrase "arranged along the optical axis O" may refer to an arrangement in which the optical axes of the lenses L1, L2, L3, and L4 or the optical axis of the image sensor I or 230, e.g., the imaging plane IS, are aligned. The imaging plane IS may receive or detect light that is aligned or focused by the lenses L1, L2, L3, and L4.

According to an embodiment, the first lens L1 may be a plastic aspheric lens having a refractive index of about 1.56 or less. In an embodiment, the first lens L1 may have a meniscus shape convex toward the sensor side and may have a negative refractive power. For example, the first lens L1 may have a meniscus shape convex toward the sensor side in a paraxial area and may include an inflection point IP on at least one of an object-side surface S1 and a sensor-side surface S2. In an embodiment, the first lens L1 may include an inflection point IP on each of the object-side surface S1 and the sensor-side surface S2. By having a meniscus shape convex toward the sensor side and/or by having a negative refractive power, the first lens L1 allows the lens assembly 400 to easily secure wide-angle or ultra-wide-angle performance even when the object-side first lens, e.g., the first lens L1, is miniaturized. In an embodiment, when the first lens L1 includes one or more inflection points IP, it may be easier to secure peripheral performance while miniaturizing the first lens L1.

According to an embodiment, the second lens L2, which is arranged second from the object side, may be a plastic aspheric lens having a negative refractive power. The third lens L3 may be a plastic aspheric lens having a positive refractive power or a negative refractive power and may be disposed between the second lens L2 and the fourth lens L4. In an embodiment, the third lens L3 may be a biconvex lens, in which an object-side surface S6 is convex toward the object side and a sensor-side surface S7 is convex toward the sensor side, and may include an inflection point IP on at least one of the object-side surface S6 and the sensor-side surface S7. In an embodiment, the third lens L3 may include an inflection point IP on each of the object-side surface S6 and the sensor-side surface S7. The fourth lens L4 may be a meniscus lens convex toward the object side and may have a negative refractive power. In an embodiment, the fourth lens L4 may be a plastic aspheric lens having a refractive index of about 1.6 or greater and may include an inflection point IP on at least one of an object-side surface S8 and a sensor-side surface S9. In an embodiment, the fourth lens L4 may include an inflection point IP on each of the object-side surface S8 and the sensor-side surface S9.

According to an embodiment, the lens assembly 400 may be miniaturized while providing an ultra-wide-angle performance of about 110 degrees or greater by satisfying at least one of the conditions described below while including at least four lenses L1, L2, L3, and L4 as described above. In an embodiment, the lens assembly 400 may provide optical performance suitable for a large-size/high-resolution image sensor while suppressing image distortion by satisfying at least one of the conditions described below while including at least four lenses L1, L2, L3, and L4 as described above. Each of the at least four lenses L1, L2, L3, and L4 may include one or more inflection points IP on at least one of an object-side surface and a sensor-side surface. When the lenses L1, L2, L3, and L4 include one or more inflection points IP, it may be easier to stabilize the optical performance (e.g., correct aberration) of the lens assembly 400.

According to an embodiment, an optical component, such as an aperture Ape or an infrared cutoff filter F, may be disposed between the first lens L1 and the image sensor I or 230. For example, the aperture Ape may be disposed between any two adjacent lenses arbitrarily selected from the lenses L1, L2, L3, and L4. Here, the clause "the aperture is disposed between any two arbitrarily selected adjacent lenses" may be understood to include a configuration in which the aperture is disposed on one of the lens surfaces facing each other of the two adjacent lenses. In an embodiment, when the aperture Ape is disposed between the first lens L1 and the second lens L2, the lens assembly 400 may have a wide-angle characteristic of about 90 degrees or greater, e.g., about 110 degrees or greater and about 130 degrees or less, even when the first lens L1 is miniaturized. Here, the clause "the first lens L1 is miniaturized" may refer to a reduction in the effective diameter of the first lens L1. In an embodiment, when implementing the same field of view, the first lens L1 may be further miniaturized as the aperture Ape is positioned closer to the first lens L1. As the lens assembly 400 is miniaturized, in order to ensure optical performance, the distance (or gap) between the aperture Ape and the first lens L1, or the effective diameter of the first lens L1, may be implemented within a predetermined range. According to an embodiment of the disclosure, the lens assembly 400 and/or the effective diameter of the first lens L1 may be miniaturized while implementing a field of view of about 110 degrees or greater when the lens assembly 400 satisfies the conditions presented through the following Equations 1 and 2 regarding the position of the aperture Ape or the effective diameter of the first lens L1.

$$[\text{Equation 1}]$$
$$TS/ST < 0.4$$

$$[\text{Equation 2}]$$
$$L1_{ape}/ImgH < 0.60$$

In Equations 1 and 2, "TS" may denote a distance from the object-side surface S1 of the first lens L1 to the aperture Ape, "ST" may denote a distance from the aperture Ape to the sensor-side surface S9 of the fourth lens L4, "L1_ape" may denote an effective diameter (clear aperture) of the first lens L1, and "ImgH" may denote an effective image height of the image sensor I or 230. In an embodiment, the term "effective diameter" may refer to the length from the point where the optical axis O intersects the lens to the edge of the area through which incident light passes. In an embodiment, the term "effective image height" may refer to the maximum length of an image formation area on the imaging plane IS of the image sensor I or 230 from the point where the optical axis O intersects the imaging plane. When the calculated value of Equation 1 exceeds 0.4, it may be difficult to reduce the effective diameter of the first lens L1 while securing a field of view of about 110 degrees. When the conditions of Equation 2 are satisfied, the effective diameter of the first lens L1 may be miniaturized relative to the effective image height of the image sensor I or 230. For example, when the conditions of Equations 1 and 2 are satisfied, it may be easier to secure the ultra-wide-angle performance of the lens assembly 400 while miniaturizing the effective diameter of the first lens L1, and when the field of view of the lens assembly 400 remains the same, the first lens L1 may be further miniaturized.

In an embodiment, an infrared cutoff filter F may suppress or block light of wavelengths (e.g., infrared), which are not visible to the human eye but are detected by a photosensitive material of film or the image sensor I or 230, from entering the image sensor I or 230. The infrared cutoff filter F may be disposed between the fourth lens L4 and the image sensor I or 230. Depending on the application of the lens assembly 400 (e.g., a depth camera), the infrared cutoff filter F may be replaced with a band-pass filter that transmits infrared light while suppressing or blocking visible light.

According to an embodiment, the infrared cutoff filter F and/or the image sensor I or 230 may be described as a separate component from the lens assembly 400. For example, the infrared cutoff filter F and/or the image sensor I or 230 may be mounted in an electronic device (e.g., the electronic device 101, 102, 104, or 300 of FIG. 1 or FIG. 4) or an optical device (e.g., the camera module 180 or 280 of FIG. 1 or FIG. 2). The multiple lenses L1, L2, L3, and L4 constituting the lens assembly 400 may be mounted in the electronic device or the optical device in a state aligned with the infrared cutoff filter F and/or the image sensor I or 230 along the optical axis O. In an embodiment, at least one of the lenses L1, L2, L3, and L4 may reciprocate along the optical axis O direction, and the electronic device (e.g., the electronic device 101, 102, 104, or 300 of FIG. 1 or FIG. 4) or the processor 120 of FIG. 1 may perform focus adjustment or focal length adjustment by reciprocating the at least one of the lenses L1, L2, L3, and L4. In an embodiment, the lens assembly 400 may be disposed as one of the camera modules 305, 312, and 313 of FIG. 3 or FIG. 4.

According to an embodiment, the lens assembly may provide excellent optical performance that satisfies the following Equations 3 and 4 regarding distortion by satisfying at least some of the combinations of the shapes and refractive powers of the above-described lenses L1, L2, L3, and L4 and/or the conditions of Equations 1 and 2.

$$[\text{Equation 3}]$$
$$-2.5\% < ((AD_{F7} - PD_{F7})/PD_{F7}) * 100\% < 2.5\%$$

$$[\text{Equation 4}]$$
$$-25.0\% < ((AD_{F10} - PD_{F10})/PD_{F10}) * 100\% < 25.0\%$$

Here, "AD_F7" may denote a distance up to 0.7F (e.g., 70% of the maximum image height formed by actual light rays) of an actual distance, which the actual light rays reach on the imaging plane IS of the image sensor I or 230, "PD_F7" may denote a distance up to 0.7F of a predicted distance PD on the imaging plane IS of the image sensor I or 230, "AD_F10" may denote a distance up to 1.0F (e.g., 100% of the maximum image height formed by actual light rays) of the actual distance, which the actual light rays reach on the imaging plane IS of the image sensor I or 230, and "PD_F10" may denote a distance up to 1.0F of a predicted distance on the imaging plane IS of the image sensor I or 230. The term "distance," as referred to in the variables of Equations 3 and 4, may denote a distance measured in a diagonal direction from the point where the optical axis O intersects the imaging plane IS of the image sensor I or 230. For example, in describing the optical performance of the lens assembly 400, Equation 3 may present a condition regarding the distortion rate at 0.7F, while Equation 4 may present a condition regarding the distortion rate at 1.0F.

According to an embodiment, when providing ultra-wide-angle performance while being miniaturized, there may be difficulties in controlling aberrations in the lens assembly 400. In the lens assembly 400 according to embodiments of the disclosure, the third lens L3 having a thickness within a predetermined range may facilitate aberration control and resolution maintenance. The lens assembly 400 may provide stable optical performance with controlled chromatic aberration and spherical aberration by satisfying the conditions of the following Equations 5 and 6 regarding the thickness of the third lens L3.

$$[\text{Equation 5}]$$
$$T3/TA > 0.34$$

$$[\text{Equation 6}]$$
$$0.7 < T3/(T1 + T2 + T4)$$

Here, "TA" may denote a distance from the object-side surface S1 of the first lens L1 to the sensor-side surface S9

of the fourth lens L4, "T1" may denote a thickness of the first lens L1, "T2" may denote a thickness of the second lens L2, "T3" may denote a thickness of the third lens L3, and "T4" may denote a thickness of the fourth lens L4. For example, the third lens L3 may have a significantly greater thickness than the first lens L1, the second lens L2, and/or the fourth lens L4. By satisfying the conditions of Equations 5 and 6, the lens assembly 400 may facilitate the control of chromatic aberration and spherical aberration using the third lens L3 and may achieve excellent resolution.

According to an embodiment, the lens assembly 400 may include a fourth lens L4 having a high refractive index of about 1.6 or greater. For example, by manufacturing the fourth lens L4 using an epoxy-based resin that provides high refractive and low dispersion properties, the chief ray angle (CRA) in the lens assembly 400 may be reduced, and chromatic aberration correction may be facilitated.

According to an embodiment, the lens assembly 400 may satisfy the following Equation 7 regarding the ratio of a total lens length to the effective image height of the image sensor I or 230. Here, the term "total lens length" may refer to a distance measured along the optical axis O from the object-side surface S1 of the first lens L1 to the image sensor I (e.g., the imaging plane IS). In an embodiment, the total lens length may be referred to as a "total track length (TTL)."

$$[Equation\ 7]$$
$$0.7 < TTL/(ImagH * 2) < 1.1$$

When the calculated value of Equation 7 becomes less than 0.7, the lenses L1, L2, L3, and L4 may become too thin to be processed into a designed shape. When the value exceeds 1.1, the lenses L1, L2, L3, and L4 may become too thick, making it difficult to miniaturize the lens assembly 400. For example, when the conditions of Equation 7 are satisfied, miniaturization of the lens assembly 400 may be facilitated at least in terms of the total lens length, and the fabrication or processing of each of the lenses L1, L2, L3, and L4 may also be facilitated.

In the above-described embodiment, although some of the reference numbers assigned to the lens surfaces in FIG. 5 are not explicitly mentioned, a person skilled in the art will be able to easily understand the configuration of each of the lenses L1, L2, L3, and L4 based on the lens data presented in the following tables. Although omitted in FIG. 5, which illustrates the layout of the lenses L1, L2, L3, and L4, the lens surfaces "S0" and/or "S12" listed in Table 1 below may serve as reference positions for the design and arrangement of the lenses L1, L2, L3, and L4. In reviewing the various embodiments described below, for the sake of simplicity in the drawings, reference numerals for some of the object-side and/or sensor-side surfaces of the lenses L1, L2, L3, and L4 and/or for inflection points may be omitted. The reference numerals omitted in the drawings for the lens surfaces may be inferred based on the configurations of the above-described embodiments, and the lens data for each embodiment may be easily understood through the tables presented below. In the detailed description of the embodiments of the disclosure, the terms "concave" or "convex" regarding the object-side surfaces or the sensor-side surfaces of the lenses L1, L2, L3, and L4 may refer to the shapes of the lens surfaces at the points where the optical axis O intersects or at the paraxial areas where the optical axis O intersects.

According to an embodiment, the lens assembly 400 may have a focal length of about 1.400 mm, an F-number of about 2.27, and/or a field of view of about 125 degrees. In an embodiment, the lens assembly 400 may satisfy at least some of the conditions presented through the shapes and refractive powers of the above-mentioned lenses L1, L2, L3, and L4 (e.g., lens surfaces) and/or equations, and may be manufactured according to the specifications exemplified in Table 1 below.

[Table 1]

| Surface | Surface type | Curvature radius (y radius) | Thickness | Refractive index (Nd) | Abbe number (Vd) |
|---|---|---|---|---|---|
| S0 | Sphere | Infinity | Infinity | | |
| S1 | Asphere | -4.030 | 0.2644 | 1.53485 | 55.74 |
| S2 | Asphere | -30.895 | 0.530 | | |
| Ape | Sphere | Infinity | 0.057 | | |
| S4 | Asphere | -15.002 | 0.532 | 1.544 | 56.0 |
| S5 | Asphere | 7.427 | 0.076 | | |
| S6 | Asphere | 1.175 | 1.0319 | 1.544 | 56.0 |
| S7 | Asphere | -0.704 | 0.02 | | |
| S8 | Asphere | 1.185 | 0.3352 | 1.6607 | 20.4 |
| S9 | Asphere | 0.483 | 0.2487 | | |

(continued)

| Surface | Surface type | Curvature radius (y radius) | Thickness | Refractive index (Nd) | Abbe number (Vd) |
|---------|--------------|----------------------------|-----------|----------------------|------------------|
| S10 | Sphere | Infinity | 0.11 | 1.517 | 64.2 |
| S11 | Sphere | Infinity | 0.041 | | |
| S12 | Sphere | Infinity | 0.511 | | |
| img | Sphere | Infinity | 0.02 | | |

The following Tables 2 and 3 describe the aspherical coefficients of the lenses L1, L2, L3, and L4, where the definition of the aspherical surface may be derived through Equation 8 below.

[142]   [Equation 8]

$$z=\frac{c'y^2}{1+\sqrt{1-(k+1)c'^2y^2}}+Ay^4+By^6+Cy^8+Dy^{10}+Ey^{12}+Fy^{14}+Gy^{16}+Hy^{18}+Jy^{20}+Ky^{22}+Ly^{24}+My^{26}+Ny^{28}+Oy^{30}$$

In Equation 8, "z" may denote a distance in the direction of the optical axis O from a point where the optical axis O passes through the lens surface, "y" may denote a distance in the perpendicular direction from the optical axis O, "c'" may represent the reciprocal of a curvature radius at a lens vertex, "k" may denote a conic constant, and "A," "B," "C," "D," "E," "F," "G," "H," "J," "K," "L," "M," "N," and "O" represent aspherical coefficients, respectively. For example, the curvature radius may indicate a value that represents the degree of curvature at each point on a curved surface or curve.

[Table 2]

| | S1 | S2 | S4 | S5 |
|---|-----|-----|-----|-----|
| k (Conic) | -7.76492E+01 | -9.90000E+01 | -9.90000E+01 | 9.90000E+01 |
| A (A4) | 6.45726E-01 | 9.80481E-01 | -2.75910E+00 | -1.77344E+00 |
| B (A6) | -7.75444E-01 | 2.34846E+00 | 3.32854E+02 | 1.36956E+01 |
| C (A8) | 1.30694E+00 | -8.70412E+01 | -2.68670E+04 | -2.42298E+02 |
| D (A10) | -1.63908E+01 | 1.17335E+03 | 1.38149E+06 | 3.45039E+03 |
| E (A12) | 1.46738E+02 | -1.00139E+04 | -4.84953E+07 | -3.89932E+04 |
| F (A14) | -7.20179E+02 | 5.84471E+04 | 1.20597E+09 | 3.52201E+05 |
| G (A16) | 2.24140E+03 | -2.40363E+05 | -2.16829E+10 | -2.50462E+06 |
| H (A18) | -4.72889E+03 | 7.06729E+05 | 2.84343E+11 | 1.35845E+07 |
| J (A20) | 6.94740E+03 | -1.49045E+06 | -2.71572E+12 | -5.44995E+07 |
| K (A22) | -7.12737E+03 | 2.23486E+06 | 1.86529E+13 | 1.57206E+08 |
| L (A24) | 5.01141E+03 | -2.32452E+06 | -8.95932E+13 | -3.14921E+08 |
| M(A26) | -2.30236E+03 | 1.59380E+06 | 2.85200E+14 | 4.14392E+08 |
| N(A28) | 6.22537E+02 | -6.47720E+05 | -5.39834E+14 | -3.21443E+08 |
| O(A30) | -7.51098E+01 | 1.18170E+05 | 4.59402E+14 | 1.11275E+08 |

[Table 3]

| | S6 | S7 | S8 | S9 |
|---|-----|-----|-----|-----|
| k (Conic) | -6.83295E+00 | -1.45823E+00 | -3.96270E+01 | -4.08909E+00 |
| A (A4) | -3.96594E-01 | -3.05916E-01 | 3.45780E-01 | -2.89154E-01 |
| B (A6) | 2.68410E+00 | 1.44623E+01 | -4.51888E+00 | -6.91572E-03 |
| C (A8) | -3.04599E+01 | -1.46573E+02 | 1.64104E+01 | 3.16345E-01 |

(continued)

|  | S6 | S7 | S8 | S9 |
|---|---|---|---|---|
| D (A10) | 2.88289E+02 | 8.93111E+02 | -4.32304E+01 | -3.70690E-01 |
| E (A12) | -2.12661E+03 | -3.67323E+03 | 7.72929E+01 | 2.13868E-01 |
| F (A14) | 1.17232E+04 | 1.05837E+04 | -8.49934E+01 | -4.87963E-02 |
| G (A16) | -4.77551E+04 | -2.16628E+04 | 4.71888E+01 | -3.18409E-02 |
| H (A18) | 1.42247E+05 | 3.14236E+04 | 3.88935E+00 | 5.27104E-02 |
| J (A20) | -3.06056E+05 | -3.16253E+04 | -2.63977E+01 | -4.88229E-02 |
| K (A22) | 4.67294E+05 | 2.09096E+04 | 1.87698E+01 | 3.32090E-02 |
| L (A24) | -4.91614E+05 | -7.84228E+03 | -4.07303E+00 | -1.59013E-02 |
| M (A26) | 3.38065E+05 | 7.29142E+02 | -2.77567E+00 | 5.03614E-03 |
| N (A28) | -1.36676E+05 | 5.57200E+02 | 2.24151E+00 | -9.46893E-04 |
| O (A30) | 2.46433E+04 | -1.60152E+02 | -4.92247E-01 | 7.95728E-05 |

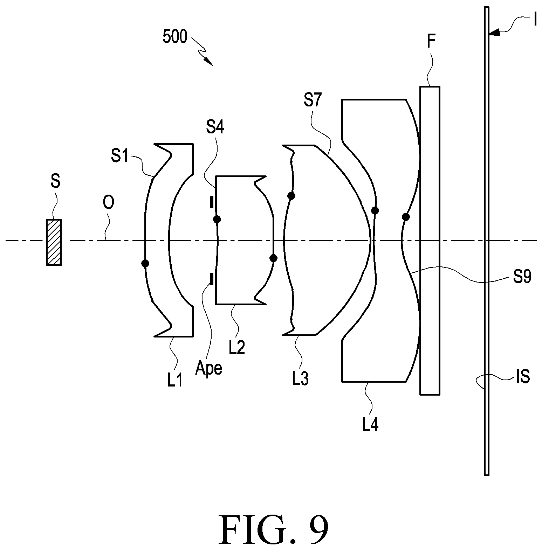

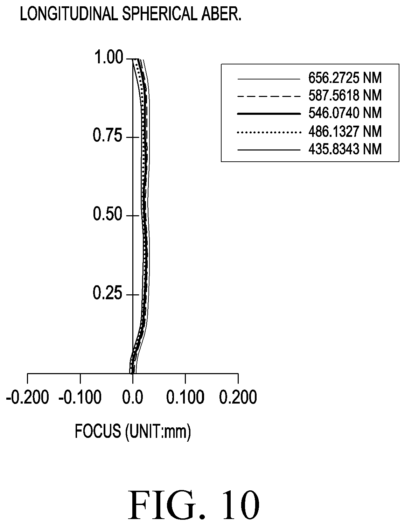

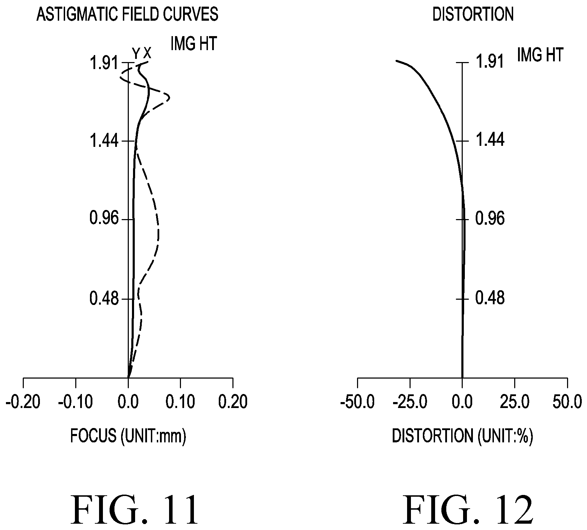

FIG. 9 is a view illustrating a lens assembly 500 according to an embodiment of the disclosure. FIG. 10 is a graph showing spherical aberration of the lens assembly 500 of FIG. 9 according to an embodiment of the disclosure. FIG. 11 is a graph showing astigmatism of the lens assembly 500 of FIG. 9 according to an embodiment of the disclosure. FIG. 12 is a graph showing distortion rate of the lens assembly 500 of FIG. 9 according to an embodiment of the disclosure.

The lens assembly 500 of FIG. 9 may have a focal length of about 1.400 mm, an F-number of about 2.24, and/or a field of view of about 127 degrees. In an embodiment, the lens assembly 500 may satisfy at least some of the conditions presented through the shapes and refractive powers of the above-mentioned lenses L1, L2, L3, and L4 (e.g., lens surfaces) and/or equations. In an embodiment, the lens assembly 500 may be manufactured with the specifications exemplified in the following Table 4, and may have aspherical coefficients of Tables 5 and 6.

[Table 4]

| Surface | Surface type | Curvature radius (y radius) | Thickness | Refractive index (Nd) | Abbe number (Vd) |
|---|---|---|---|---|---|
| S0 | Sphere | Infinity | Infinity |  |  |
| S1 | Asphere | -11.23208 | 0.27506 | 1.53485 | 55.74 |
| S2 | Asphere | 11.97587 | 0.48827 |  |  |
| Ape | Sphere | Infinity | 0.07058 |  |  |
| S4 | Asphere | -6.16583 | 0.51996 | 1.54401 | 55.99 |
| S5 | Asphere | 7.63154 | 0.07832 |  |  |
| S6 | Asphere | 1.07017 | 1.10278 | 1.54401 | 55.99 |
| S7 | Asphere | -0.63894 | 0.02988 |  |  |
| S8 | Asphere | 1.42893 | 0.34204 | 1.67074 | 19.24 |
| S9 | Asphere | 0.48392 | 0.27330 |  |  |
| S10 | Sphere | Infinity | 0.11000 | 1.51680 | 64.2 |
| S11 | Sphere | Infinity | 0.03000 |  |  |
| S12 | Sphere | Infinity | 0.43000 |  |  |
| img | Sphere | Infinity | 0.02007 |  |  |

[Table 5]

|  | S1 | S2 | S4 | S5 |
|---|---|---|---|---|
| k (Conic) | 5.44263E-01 | 7.36533E+01 | 9.90181E+01 | 3.89313E+01 |

(continued)

|  | S1 | S2 | S4 | S5 |
|---|---|---|---|---|
| A (A4) | 6.04092E-01 | 8.08214E-01 | -2.97585E+00 | -1.26851E+00 |
| B (A6) | -5.94910E-01 | -3.01808E-01 | 4.28536E+02 | -1.00227E+01 |
| C (A8) | -6.02001E-01 | -9.55006E+00 | -4.07380E+04 | 3.61732E+02 |
| D (A10) | 7.88236E+00 | 7.66450E+01 | 2.37768E+06 | -6.16232E+03 |
| E (A12) | -3.33783E+01 | -3.16810E+02 | -9.09405E+07 | 6.71448E+04 |
| F (A14) | 1.09954E+02 | 7.77852E+02 | 2.38498E+09 | -4.96285E+05 |
| G (A16) | -3.11377E+02 | -1.11312E+03 | -4.41682E+10 | 2.49978E+06 |
| H (A18) | 7.18497E+02 | 7.92145E+02 | 5.87053E+11 | -8.26981E+06 |
| J (A20) | -1.25929E+03 | 1.14193E+01 | -5.62440E+12 | 1.55814E+07 |
| K (A22) | 1.59775E+03 | -6.60459E+02 | 3.85238E+13 | -4.53696E+06 |
| L (A24) | -1.40809E+03 | 1.01917E+03 | -1.84063E+14 | -5.56810E+07 |
| M (A26) | 8.13819E+02 | -1.00807E+03 | 5.82956E+14 | 1.43280E+08 |
| N (A28) | -2.76696E+02 | 5.28771E+02 | -1.10043E+15 | -1.57290E+08 |
| O (A30) | 4.18766E+01 | -9.51556E+01 | 9.37791E+14 | 6.84876E+07 |

[Table 6]

|  | S6 | S7 | S8 | S9 |
|---|---|---|---|---|
| k (Conic) | -6.75372E+00 | -1.87141E+00 | -4.10246E+01 | -4.30056E+00 |
| A (A4) | -2.44814E-01 | 4.65365E-01 | 2.18458E-01 | -2.14540E-01 |
| B (A6) | -8.47410E-01 | 2.67553E+00 | -3.28467E+00 | -2.16967E-03 |
| C (A8) | 2.92992E+01 | -4.72662E+01 | 1.19770E+01 | 1.91869E-01 |
| D (A10) | -2.89403E+02 | 3.38148E+02 | -2.95425E+01 | -2.25707E-01 |
| E (A12) | 1.72438E+03 | -1.51753E+03 | 3.84069E+01 | 8.42421E-02 |
| F (A14) | -7.06142E+03 | 4.69053E+03 | 1.78676E+01 | 1.79208E-01 |
| G (A16) | 2.08161E+04 | -1.03639E+04 | -1.95666E+02 | -4.48603E-01 |
| H (A18) | -4.50505E+04 | 1.66299E+04 | 4.60664E+02 | 5.67109E-01 |
| J (A20) | 7.18358E+04 | -1.94225E+04 | -6.57148E+02 | -4.73783E-01 |
| K (A22) | -8.34714E+04 | 1.63379E+04 | 6.34698E+02 | 2.72478E-01 |
| L (A24) | 6.86919E+04 | -9.63622E+03 | -4.17942E+02 | -1.06810E-01 |
| M (A26) | -3.78708E+04 | 3.77857E+03 | 1.79904E+02 | 2.72688E-02 |
| N (A28) | 1.25185E+04 | -8.83851E+02 | -4.56003E+01 | -4.08529E-03 |
| O (A30) | -1.87145E+03 | 9.32333E+01 | 5.15309E+00 | 2.72132E-04 |

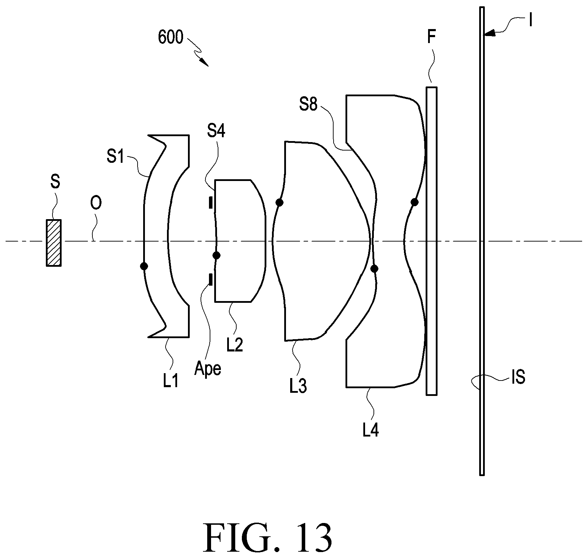

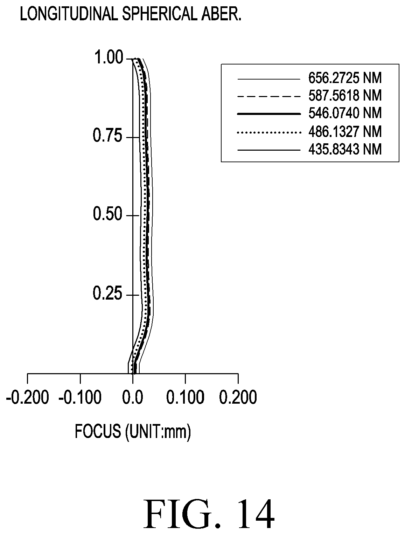

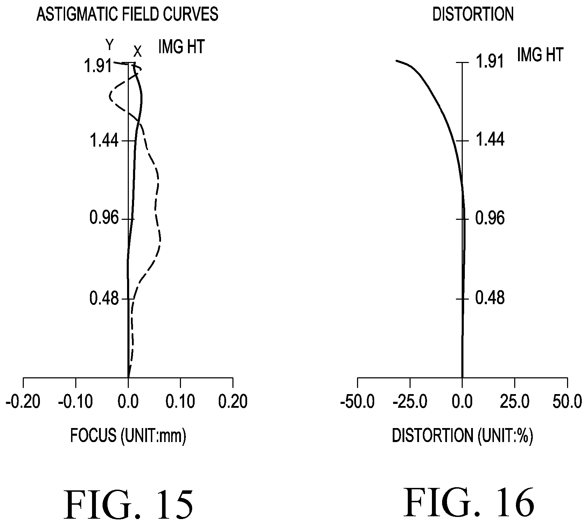

FIG. 13 is a view illustrating a lens assembly 600 according to an embodiment of the disclosure. FIG. 14 is a graph showing spherical aberration of the lens assembly 600 of FIG. 13 according to an embodiment of the disclosure. FIG. 15 is a graph showing astigmatism of the lens assembly 600 of FIG. 13 according to an embodiment of the disclosure. FIG. 16 is a graph showing distortion rate of the lens assembly 600 of FIG. 13 according to an embodiment of the disclosure.

The lens assembly 600 of FIG. 13 may have a focal length of about 1.402 mm, an F-number of about 2.28, and/or a field of view of about 126 degrees. In an embodiment, the lens assembly 600 may satisfy at least some of the conditions presented through the shapes and refractive powers of the above-mentioned lenses L1, L2, L3, and L4 (e.g., lens surfaces) and/or equations. In an embodiment, the lens assembly 600 may be manufactured with the specifications exemplified in the following Table 7, and may have aspherical coefficients of Tables 8 and 9.

[Table 7]

| Surface | Surface type | Curvature radius (y radius) | Thickness | Refractive index (Nd) | Abbe number (Vd) |
|---------|-------------|-----------------------------|-----------|----------------------|------------------|
| S0 | Sphere | Infinity | Infinity | | |
| S1 | Asphere | -10.26803 | 0.28292 | 1.53485 | 55.74 |
| S2 | Asphere | 9.37248 | 0.51646 | | |
| Ape | Sphere | Infinity | 0.05307 | | |
| S4 | Asphere | -7.03724 | 0.55912 | 1.54401 | 55.99 |
| S5 | Asphere | 6.52349 | 0.08116 | | |
| S6 | Asphere | 1.02269 | 1.14346 | 1.54401 | 55.99 |
| S7 | Asphere | -0.64073 | 0.03000 | | |
| S8 | Asphere | 1.69116 | 0.35522 | 1.67074 | 19.24 |
| S9 | Asphere | 0.51281 | 0.26282 | | |
| S10 | Sphere | Infinity | 0.11000 | 1.51680 | 64.2 |
| S11 | Sphere | Infinity | 0.45704 | | |
| S12 | Sphere | Infinity | 0.01460 | | |
| img | Sphere | Infinity | 0.02000 | | |

[Table 8]

| | S1 | S2 | S4 | S5 |
|--|----|----|----|----|
| k (Conic) | 2.25536E+01 | 4.90008E+01 | 6.06466E+01 | 6.09775E+01 |
| A (A4) | 5.70247E-01 | 7.82368E-01 | -2.75192E+00 | -1.11283E+00 |
| B (A6) | -4.62715E-01 | -2.71057E-01 | 4.04182E+02 | -1.76021E+01 |
| C (A8) | -7.99774E-01 | -9.06693E+00 | -3.81077E+04 | 5.44167E+02 |
| D (A10) | 7.36460E+00 | 7.13140E+01 | 2.22836E+06 | -9.12203E+03 |
| E (A12) | -3.16797E+01 | -2.90435E+02 | -8.67250E+07 | 1.02411E+05 |
| F (A14) | 1.11195E+02 | 7.03277E+02 | 2.34336E+09 | -8.14071E+05 |
| G (A16) | -3.19973E+02 | -9.94069E+02 | -4.51103E+10 | 4.68432E+06 |
| H (A18) | 7.10893E+02 | 7.08577E+02 | 6.26947E+11 | -1.96654E+07 |
| J (A20) | -1.16990E+03 | -3.86360E+01 | -6.30412E+12 | 6.00222E+07 |
| K (A22) | 1.38577E+03 | -4.35469E+02 | 4.54087E+13 | -1.31092E+08 |
| L (A24) | -1.14224E+03 | 6.22289E+02 | -2.28314E+14 | 1.98260E+08 |
| M (A26) | 6.19645E+02 | -5.51114E+02 | 7.60667E+14 | -1.95318E+08 |
| N (A28) | -1.98378E+02 | 2.27102E+02 | -1.50858E+15 | 1.11101E+08 |
| O (A30) | 2.83394E+01 | -1.02736E+01 | 1.34797E+15 | -2.69919E+07 |

[Table 9]

| | S6 | S7 | S8 | S9 |
|--|----|----|----|----|
| k (Conic) | -6.61825E+00 | -1.85495E+00 | -6.38142E+01 | -4.60646E+00 |
| A (A4) | -2.02110E-01 | 4.68529E-01 | 2.28545E-01 | -2.03364E-01 |
| B (A6) | -2.58615E+00 | 2.72473E+00 | -3.36902E+00 | 1.18887E-03 |
| C (A8) | 6.22837E+01 | -4.59841E+01 | 1.24738E+01 | 1.72964E-01 |
| D (A10) | -6.6213 1 E+02 | 3.14647E+02 | -3.10913E+01 | -2.11826E-01 |

(continued)

|  | S6 | S7 | S8 | S9 |
|---|---|---|---|---|
| E (A12) | 4.47059E+03 | -1.34626E+03 | 3.98075E+01 | 9.91990E-02 |
| F (A14) | -2.09208E+04 | 3.93384E+03 | 2.57973E+01 | 1.09418E-01 |
| G (A16) | 7.01999E+04 | -8.10901E+03 | -2.33825E+02 | -3.12400E-01 |
| H (A18) | -1.71301E+05 | 1.19216E+04 | 5.50043E+02 | 3.94534E-01 |
| J (A20) | 3.04295E+05 | -1.24513E+04 | -7.93115E+02 | -3.22902E-01 |
| K (A22) | -3.89004E+05 | 9.05413E+03 | 7.76732E+02 | 1.80624E-01 |
| L (A24) | 3.48190E+05 | -4.38605E+03 | -5.19262E+02 | -6.85257E-02 |
| M (A26) | -2.06842E+05 | 1.29471E+03 | 2.27059E+02 | 1.68493E-02 |
| N (A28) | 7.31666E+04 | -1.89792E+02 | -5.84866E+01 | -2.41761E-03 |
| O (A30) | -1.16520E+04 | 6.42639E+00 | 6.71860E+00 | 1.53174E-04 |

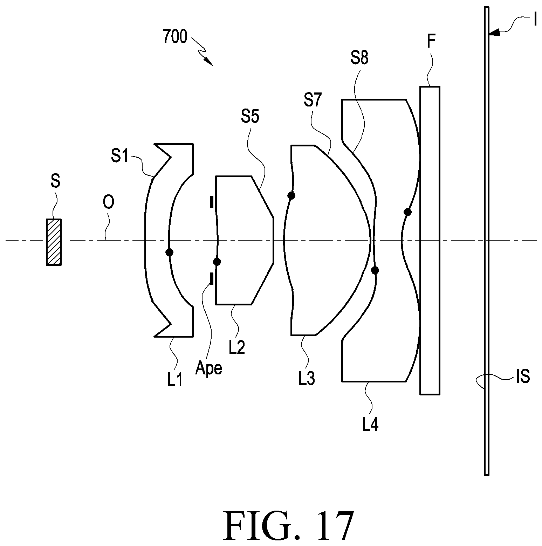

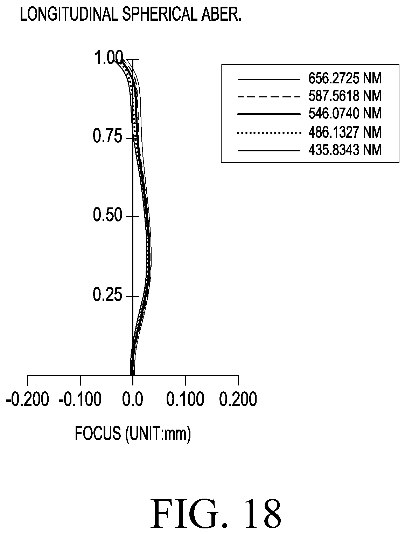

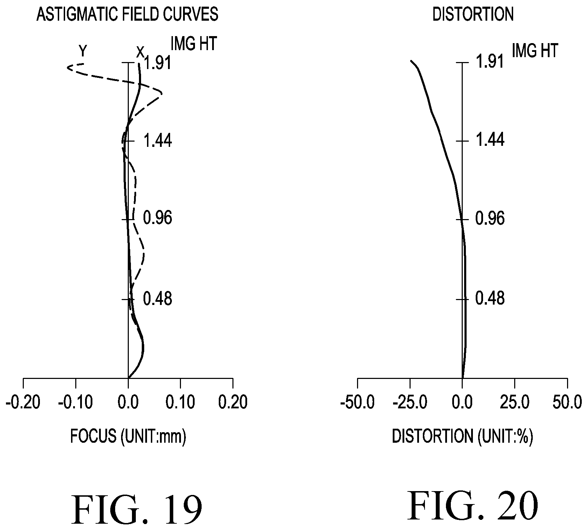

FIG. 17 is a view illustrating a lens assembly 700 according to an embodiment of the disclosure. FIG. 18 is a graph showing spherical aberration of the lens assembly 700 of FIG. 17 according to an embodiment of the disclosure. FIG. 19 is a graph showing astigmatism of the lens assembly 700 of FIG. 17 according to an embodiment of the disclosure. FIG. 20 is a graph showing distortion rate of the lens assembly 700 of FIG. 17 according to an embodiment of the disclosure.

The lens assembly 700 of FIG. 17 may have a focal length of about 1.386 mm, an F-number of about 2.29, and/or a field of view of about 122 degrees. In an embodiment, the lens assembly 700 may satisfy at least some of the conditions presented through the shapes and refractive powers of the above-mentioned lenses L1, L2, L3, and L4 (e.g., lens surfaces) and/or equations. In an embodiment, the lens assembly 700 may be manufactured with the specifications exemplified in the following Table 10, and may have aspherical coefficients of Tables 11 and 12.

[Table 10]

| Surface | Surface type | Curvature radius (y radius) | Thickness | Refractive index (Nd) | Abbe number (Vd) |
|---|---|---|---|---|---|
| S0 | Sphere | Infinity | Infinity |  |  |
| S1 | Asphere | -9.69449 | 0.25923 | 1.54401 | 55.99 |
| S2 | Asphere | 4.88773 | 0.49077 |  |  |
| Ape | Sphere | Infinity | 0.03000 |  |  |
| S4 | Asphere | -7.27986 | 0.60412 | 1.54401 | 55.99 |
| S5 | Asphere | 151.15659 | 0.10651 |  |  |
| S6 | Asphere | 1.12873 | 0.95071 | 1.54401 | 55.99 |
| S7 | Asphere | -0.65112 | 0.03000 |  |  |
| S8 | Asphere | 1.46606 | 0.29931 | 1.66075 | 20.38 |
| S9 | Asphere | 0.50224 | 0.20056 |  |  |
| S10 | Sphere | Infinity | 0.21000 | 1.51680 | 64.2 |
| S11 | Sphere | Infinity | 0.59000 |  |  |
| S12 | Sphere | Infinity | 0.02550 |  |  |
| img | Sphere | Infinity | 0.01000 |  |  |

[Table 11]

|  | S1 | S2 | S4 | S5 |
|---|---|---|---|---|
| k (Conic) | -7.17858E+01 | 2.19777E+01 | -5.63295E+01 | -9.90000E+01 |
| A (A4) | 9.40058E-01 | 1.10228E+00 | -4.86997E-01 | -1.07347E+00 |

(continued)

|  | S1 | S2 | S4 | S5 |
|---|---|---|---|---|
| B (A6) | -2.37933E+00 | -4.87459E-01 | -4.94073E+00 | -2.06798E+00 |
| C (A8) | 6.93897E+00 | -1.74618E+01 | 4.01573E+02 | 4.33861E+01 |
| D (A10) | -1.38986E+01 | 1.63968E+02 | -1.71733E+04 | -3.77760E+02 |
| E (A12) | 1.42545E+01 | -7.83318E+02 | 3.91474E+05 | 1.97508E+03 |
| F (A14) | 2.98034E+00 | 2.22272E+03 | -5.13186E+06 | -6.72751E+03 |
| G (A16) | -2.48008E+01 | -3.68654E+03 | 3.86400E+07 | 1.45439E+04 |
| H (A18) | 2.48713E+01 | 3.24157E+03 | -1.55281E+08 | -1.80930E+04 |
| J (A20) | -8.49689E+00 | -1.15819E+03 | 2.58619E+08 | 9.86277E+03 |
| K (A22) | 0.00000E+00 | 0.00000E+00 | 0.00000E+00 | 0.00000E+00 |
| L (A24) | 0.00000E+00 | 0.00000E+00 | 0.00000E+00 | 0.00000E+00 |
| M (A26) | 0.00000E+00 | 0.00000E+00 | 0.00000E+00 | 0.00000E+00 |
| N (A28) | 0.00000E+00 | 0.00000E+00 | 0.00000E+00 | 0.00000E+00 |
| O (A30) | 0.00000E+00 | 0.00000E+00 | 0.00000E+00 | 0.00000E+00 |

[Table 12]

|  | S6 | S7 | S8 | S9 |
|---|---|---|---|---|
| k (Conic) | -5.52027E+00 | -1.58514E+00 | -9.90000E+01 | -4.72336E+00 |
| A (A4) | -1.78036E-01 | -1.38466E-01 | 3.44292E-01 | -3.40059E-01 |
| B (A6) | -6.05405E-01 | 1.57014E+01 | -5.76696E+00 | 1.91543E-02 |
| C (A8) | 7.93466E+00 | -1.68251E+02 | 2.30008E+01 | 4.25139E-01 |
| D (A10) | 2.76843E+01 | 9.73812E+02 | -5.82609E+01 | -6.14010E-01 |
| E (A12) | -1.14278E+03 | -3.31947E+03 | 6.75019E+01 | 3.67650E-01 |
| F (A14) | 1.05393E+04 | 5.72863E+03 | 1.06691E+02 | 1.63047E-01 |
| G (A16) | -5.48162E+04 | 1.92552E+03 | -6.63722E+02 | -6.69503E-01 |
| H (A18) | 1.85443E+05 | -3.68410E+04 | 1.59229E+03 | 9.29822E-01 |
| J (A20) | -4.27931E+05 | 9.89576E+04 | -2.47345E+03 | -8.67979E-01 |
| K (A22) | 6.81361E+05 | -1.49030E+05 | 2.68938E+03 | 5.75153E-01 |
| L (A24) | -7.38129E+05 | 1.41557E+05 | -2.03419E+03 | -2.63169E-01 |
| M (A26) | 5.20231E+05 | -8.43752E+04 | 1.01690E+03 | 7.84383E-02 |
| N (A28) | -2.15321E+05 | 2.89537E+04 | -3.00798E+02 | -1.36553E-02 |
| O (A30) | 3.97383E+04 | -4.37717E+03 | 3.97214E+01 | 1.05203E-03 |

According to an embodiment, regarding the conditions presented through Equations 1 to 7, the values calculated based on the lens data of the lens assemblies 400, 500, 600, and 700 of FIGS. 5, 9, 13, and 17 are exemplified in Table 13 below.

[Table 13]

|  | Embodiment 1 | Embodiment 2 | Embodiment 3 | Embodiment 4 |
|---|---|---|---|---|
| Equation 1 | 0.387 | 0.356 | 0.390 | 0.371 |
| Equation 2 | 0.561 | 0.541 | 0.543 | 0.506 |
| Equation 3 | -1.9% | -1.48% | -1.40% | -2.2% |

(continued)

|  | Embodiment 1 | Embodiment 2 | Embodiment 3 | Embodiment 4 |
|---|---|---|---|---|
| Equation 4 | -20.5% | -19.955% | -20.5% | -19.6% |
| Equation 5 | 0.362 | 0.379 | 0.363 | 0.343 |
| Equation 6 | 0.912 | 0.969 | 0.923 | 0.818 |
| Equation 7 | 0.987 | 0.984 | 0.987 | 0.992 |

As described above, the lens assemblies 210, 400, 500, 600, and 700 according to the embodiments of the disclosure may facilitate miniaturization while providing ultra-wide-angle characteristics (e.g., a field of view of about 110 degrees or greater) by satisfying at least some of the conditions presented through the configurations of the lenses L1, L2, L3, and L4 regarding the above-described shapes and refractive powers and/or equations. For example, since arranging a lens assembly in a miniaturized electronic device, the lens assembly may be arranged adjacent to at least one other camera in the miniaturized electronic device. In an embodiment, even when mounted in an electronic device including multiple cameras, the lens assembly may enhance image quality in wide-angle or ultra-wide-angle photography while harmonizing with the appearance of the electronic device.

Advantageous effects obtainable from the disclosure may not be limited to the above - mentioned effects, and other effects which are not mentioned may be clearly understood from the following descriptions by those skilled in the art to which the disclosure pertains.

According to an embodiment of the disclosure, a lens assembly (e.g., the lens assembly 210, 400, 500, 600, or 700 of FIG. 2, FIG. 5, FIG. 9, FIG. 13, and/or FIG. 17) includes an image sensor (e.g., the image sensor 230 or I of FIG. 2, FIG. 5, FIG. 9, FIG. 13, and/or FIG. 17), at least four plastic lenses (e.g., the lenses L1, L2, L3, and L4 of FIG. 5, FIG. 9, FIG. 13, and/or FIG. 17) sequentially arranged along an optical axis (e.g., the optical axis O of FIG. 5, FIG. 9, FIG. 13, and/or FIG. 17) in a direction toward the image sensor. The plastic lenses include a first lens having a negative refractive power, a second lens having a negative refractive power, a third lens having a refractive power, a fourth lens having a negative refractive power, and an aperture (e.g., the aperture Ape of FIG. 5, FIG. 9, FIG. 13, and/or FIG. 17) disposed between the first lens and the second lens. In an embodiment, the lens assembly may satisfy Conditional Expressions 1 to 5 below.

$$[\text{Conditional Expression 1}]$$
$$FOV > 110 \text{ degrees}$$

$$[\text{Conditional Expression 2}]$$
$$TS/ST < 0.4$$

$$[\text{Conditional Expression 3}]$$
$$L1\_ape/ImgH < 0.60$$

$$[\text{Conditional Expression 4}]$$
$$-2.5\% < ((AD\_F7 - PD\_F7)/PD\_F7) * 100\% < 2.5\%$$

$$[\text{Conditional Expression 5}]$$
$$-25.0\% < ((AD\_F10 - PD\_F10)/PD\_F10) * 100\% < 25.0\%$$

Here, "FOV" may denote a field of view of the lens assembly, "TS" may denote a distance from an object-side surface (e.g., the surface indicated as S1 in FIG. 5, FIG. 9, FIG. 13, and/or FIG. 17) of the first lens to the aperture, "ST" may denote a distance from the aperture to a sensor-side surface (e.g., the surface indicated as "S9" in FIG. 5, FIG. 9, FIG. 13, and/or FIG. 17) of the fourth lens, "L1 ape" may denote an effective diameter of the first lens, "ImgH" may denote an effective image height of the image sensor, "AD _F7" may denote a distance up to 0.7F of an actual light-received area on an imaging plane (e.g., the imaging plane (IS) of FIG. 5, FIG. 9, FIG. 13, and/or FIG. 17) of the image sensor, "PD_F7" may denote a distance up to 0.7F of a predicted distance (PD) on the imaging plane of the image sensor, "AD_F10" may denote a distance up to 1.0F of the actual light-received area on the imaging plane of the image sensor, and "PD_F10" may denote a distance up to 1.0F of the predicted distance on the imaging plane of the image sensor.

According to an embodiment, the lens assembly may satisfy Conditional Expression 6 and 7 below.

[Conditional Expression 6]

$$T3/TA > 0.34$$

[Conditional Expression 7]

$$0.7 < T3/(T1 + T2 + T4)$$

Here, "TA" may denote a distance from an object-side surface of the first lens to a sensor-side surface of the fourth lens, "T1" may denote a thickness of the first lens, "T2" may denote a thickness of the second lens, "T3" may denote a thickness of the third lens, and "T4" may denote a thickness of the fourth lens.

According to an embodiment, each of the first lens, the second lens, the third lens, and the fourth lens may include an inflection point (IP) on at least one of an object-side surface and a sensor-side surface (e.g., the inflection point (IP) of FIG. 5, FIG. 9, FIG. 13, and/or FIG. 17).

According to an embodiment, the lens assembly as described above may satisfy Conditional Expression 8 below.

[Conditional Expression 8]

$$nd4 > 1.6$$

Here, "nd4" may be the refractive index of the fourth lens.

According to an embodiment, the lens assembly as described above may satisfy Conditional Expression 9 below.

[Conditional Expression 9]

$$0.7 < TTL/(ImgH * 2) < 1.1$$

Here, "TTL" may denote a distance from an object-side surface of the first lens to an imaging plane of the image sensor.

According to an embodiment, the third lens may include a convex object-side surface (e.g., the surface indicated as "S6" in FIG. 5, FIG. 9, FIG. 13, and/or FIG. 17) and a convex sensor-side surface (e.g., the surface indicated as "S7" in FIG. 5, FIG. 9, FIG. 13, and/or FIG. 17).

According to an embodiment, the first lens may have a meniscus shape convex toward the image sensor in a paraxial area.

According to an embodiment of the disclosure, a lens assembly (e.g., the lens assembly 210, 400, 500, 600, or 700 of FIG. 2, FIG. 5, FIG. 9, FIG. 13, and/or FIG. 17) includes an image sensor (e.g., the image sensor 230 or I of FIG. 2, FIG. 5, FIG. 9, FIG. 13, and/or FIG. 17), at least four plastic lenses (e.g., the lenses L1, L2, L3, and L4 of FIG. 5, FIG. 9, FIG. 13, and/or FIG. 17) sequentially arranged along an optical axis (e.g., the optical axis O of FIG. 5, FIG. 9, FIG. 13, and/or FIG. 17) in a direction toward the image sensor. The plastic lenses include a first lens having a negative refractive power, a second lens having a negative refractive power, a third lens having a refractive power, a fourth lens having a negative refractive power, and an aperture Ape disposed between the first lens and the second lens. In an embodiment, the lens assembly may satisfy Conditional Expressions 1, 3, 6, and 7 below.

[Conditional Expression 1]

$$FOV > 110 \text{ degrees}$$

[Conditional Expression 3]

$$L1\_ape/ImgH < 0.60$$

[Conditional Expression 6]

$$T3/TA > 0.34$$

[Conditional Expression 7]

$$0.7 < T3/(T1 + T2 + T4)$$

Here, "FOV" may denote a field of view of the lens assembly, "L1_ape" may denote an effective diameter of the first lens, "ImgH" may denote an effective image height of the image sensor, "TA" may denote a distance from an object-side surface (e.g., the surface indicated as "S1" in FIG. 5, FIG. 9, FIG. 13, and/or FIG. 17) of the first lens to a sensor-side surface (e.g., the surface indicated as "S9" in FIG. 5, FIG. 9, FIG. 13, and/or FIG. 17) of the fourth lens, "T1" may denote a thickness of the first lens, "T2" may denote a thickness of the second lens, "T3" may denote a thickness of the third lens, and "T4" may denote a thickness of the fourth lens.

According to an embodiment, the lens assembly as described above may satisfy Conditional Expression 2 below.

[Conditional Expression 2]

$$TS/ST < 0.4$$

Here, "TS" may denote a distance from an object-side surface of the first lens to the aperture, and "ST" may denote a distance from the aperture to a sensor-side surface of the fourth lens.

According to an embodiment, each of the first lens, the second lens, the third lens, and the fourth lens may include an inflection point (IP) on at least one of an object-side surface and a sensor-side surface (e.g., the inflection point (IP) of FIG. 5, FIG. 9, FIG. 13, and/or FIG. 17).

According to an embodiment, the lens assembly as described above may satisfy Conditional Expression 8 below.

[Conditional Expression 8]

$$nd4 > 1.6$$

Here, "nd4" may be the refractive index of the fourth lens.

According to an embodiment, the lens assembly as described above may satisfy Conditional Expression 9 below.

[Conditional Expression 9]

$$0.7 < TTL/(ImgH * 2) < 1.1$$

Here, "TTL" may denote a distance from an object-side surface of the first lens to an imaging plane (e.g., the imaging plane (IS) of FIG. 5, FIG. 9, FIG. 13, and/or FIG. 17) of the image sensor.

According to an embodiment, the third lens may include a convex object-side surface (e.g., the surface indicated as "S6" in FIG. 5, FIG. 9, FIG. 13, and/or FIG. 17) and a convex sensor-side surface (e.g., the surface indicated as "S7" in FIG. 5, FIG. 9, FIG. 13, and/or FIG. 17).

According to an embodiment, the first lens may have a meniscus shape convex toward the image sensor in a paraxial area.

According to an embodiment of the disclosure, an electronic device (e.g., the electronic device 101, 102, 104, or 300 of FIG. 1, FIG. 3, and/or FIG. 4) includes a lens assembly (e.g., the lens assembly 210, 400, 500, 600, or 700 of FIG. 2, FIG. 5, FIG. 9, FIG. 13, and/or FIG. 17) and a processor (e.g., the processor 120 of FIG. 1 or the image signal processor 260 of FIG. 2) configured to acquire an image of a subject using the lens assembly. In an embodiment, the lens assembly includes an image sensor (e.g., the image sensor 230 or I of FIGS. 2, 5, 9, 13, and/or 17), at least four plastic lenses (e.g., the lenses L1, L2, L3, and L4 of FIG. 5, FIG. 9, FIG. 13, and/or FIG. 17) sequentially arranged along an optical axis (e.g., the optical axis O of FIG. 5, FIG. 9, FIG. 13, and/or FIG. 17) in a direction toward the image sensor. The plastic lenses include a first lens having a negative refractive power, a second lens having a negative refractive power, a third lens having a refractive power, a fourth lens having a negative refractive power, and an aperture (e.g., the aperture Ape of FIG. 5, FIG. 9, FIG. 13, and/or FIG. 17) disposed between the first lens and the second lens. In an embodiment, the electronic device and/or the lens assembly may satisfy Conditional Expressions 2, 3, 6, and 7 below.

[Conditional Expression 2]

$$TS/ST < 0.4$$

[Conditional Expression 3]

$$L1\_ape/ImgH < 0.60$$

[Conditional Expression 6]

$$T3/TA > 0.34$$

[Conditional Expression 7]

$$0.7 < T3/(T1 + T2 + T4)$$

Here, "TS" may denote a distance from an object-side surface (e.g., the surface indicated as "S1" in FIG. 5, FIG. 9, FIG. 13, and/or 17) of the first lens to the aperture, "ST" may denote a distance from the aperture to a sensor-side surface (e.g., the surface indicated as "S9" in FIG. 5, FIG. 9, FIG. 13, and/or FIG. 17) of the fourth lens, "L1_ape" may denote an effective diameter of the first lens, "ImgH" may denote an effective image height of the image sensor, "TA" may denote a distance from an object-side surface of the first lens to a sensor-side surface of the fourth lens, "T1" may denote a thickness of the first lens, "T2" may denote a thickness of the second lens, "T3" may denote a thickness of the third lens, and "T4" may denote a thickness of the fourth lens.

According to an embodiment, each of the first lens, the second lens, the third lens, and the fourth lens may include an inflection point (IP) on at least one of an object-side surface and a sensor-side surface (e.g., the inflection point (IP) of FIG. 5, FIG. 9, FIG. 13, and/or FIG. 17).

According to an embodiment, the electronic device and/or the lens assembly as described above may satisfy Conditional Expression 8 below.

[Conditional Expression 8]

$$nd4 > 1.6$$

Here, "nd4" may be the refractive index of the fourth lens.

According to an embodiment, the electronic device and/or the lens assembly as described above may satisfy Conditional Expression 9 below.

[Conditional Expression 9]

$$0.7 < TTL/(ImgH * 2) < 1.1$$

Here, "TTL" may denote a distance from an object-side surface of the first lens to an imaging plane (e.g., the imaging plane (IS) of FIG. 5, FIG. 9, FIG. 13, and/or FIG. 17) of the image sensor.

According to an embodiment, the third lens may include a convex object-side surface (e.g., the surface indicated as "S6" in FIG. 5, FIG. 9, FIG. 13, and/or FIG. 17) and a convex sensor-side surface (e.g., the surface indicated as "S7" in FIG. 5, FIG. 9, FIG. 13, and/or FIG. 17).

According to an embodiment, the first lens may have a meniscus shape convex toward the image sensor in a paraxial area.

According to an embodiment of the disclosure, the electronic device may include any one of the above-described lens assemblies, a processor, and memory configured to store instructions that, when executed by the processor, cause the electronic device to acquire an image of a subject using the lens assembly.

Although an embodiment of the disclosure has been illustrated and described, it should be appreciated that the embodiment does not limit the disclosure, but is provided for the sake of illustration. It will be apparent to those skilled in the art that various changes may be made to the form and details of the disclosure without departing from the overall perspective of the disclosure including the appended claims and equivalents thereof.

**Claims**

1. A lens assembly (400; 500; 600; 700) comprising:

    an image sensor (I);

at least four plastic lenses (L1, L2, L3, L4) sequentially arranged along an optical axis (O) in a direction toward the image sensor, wherein the plastic lenses comprise a first lens (L1) having a negative refractive power, a second lens (L2) having a negative refractive power, a third lens (L3) having a refractive power, and a fourth lens (L4) having a negative refractive power; and

an aperture (Ape) disposed between the first lens and the second lens,
wherein the lens assembly satisfies Conditional Expressions 1 to 5 below:

[Conditional Expression 1]

$$FOV > 110 \text{ degrees}$$

[Conditional Expression 2]

$$TS/ST < 0.4$$

[Conditional Expression 3]

$$L1\_ape/ImgH < 0.60$$

[Conditional Expression 4]

$$-2.5\% < ((AD\_F7 - PD\_F7)/PD\_F7) * 100\% < 2.5\%$$

[Conditional Expression 5]

$$-25.0\% < ((AD\_F10 - PD\_F10)/PD\_F10) * 100\% < 25.0\%$$

where "FOV" denotes a field of view of the lens assembly, "TS" denotes a distance from an object-side surface (S1) of the first lens to the aperture, "ST" denotes a distance from the aperture to a sensor-side surface (S9) of the fourth lens, "L1_ape" denotes an effective diameter of the first lens, "ImgH" denotes an effective image height of the image sensor, "AD_F7" denotes a distance up to 0.7F of an actual light-received area on an imaging plane (IS) of the image sensor, "PD_F7" denotes a distance up to 0.7F of a predicted distance (PD) on the imaging plane of the image sensor, "AD_F10" denotes a distance up to 1.0F of the actual light-received area on the imaging plane of the image sensor, and "PD_F10" denotes a distance up to 1.0F of the predicted distance on the imaging plane of the image sensor.

2. The lens assembly of claim 1, wherein the lens assembly satisfies Conditional Expressions 6 and 7 below:

[Conditional Expression 6]

$$T3/TA > 0.34$$

[Conditional Expression 7]

$$0.7 < T3/(T1 + T2 + T4)$$

where "TA" denotes a distance from an object-side surface of the first lens to a sensor-side surface of the fourth lens, "T1" denotes a thickness of the first lens, "T2" denotes a thickness of the second lens, "T3" denotes a thickness of the third lens, and "T4" denotes a thickness of the fourth lens.

3. The lens assembly of any one of claims 1 and 2, wherein each of the first lens, the second lens, the third lens, and the fourth lens comprises an inflection point (IP) on at least one of an object-side surface and a sensor-side surface.

4. The lens assembly of any one of claims 1 to 3, wherein the lens assembly satisfies Conditional Expression 8 below:

[Conditional Expression 8]

$$nd4 > 1.6$$

where "nd4" denotes a refractive index of the fourth lens.

5. The lens assembly of any one of claims 1 to 4, wherein the lens assembly satisfies Conditional Expression 9 below:

[Conditional Expression 9]

$$0.7 < TTL/(ImgH * 2) < 1.1$$

where "TTL" denotes a distance from an object-side surface of the first lens to an imaging plane of the image sensor.

6. The lens assembly of any one of claims 1 to 5, wherein the third lens comprises a convex object-side surface (S6) and a convex sensor-side surface (S7).

7. The lens assembly of any one of claims 1 to 6, wherein the first lens has a meniscus shape convex toward the image sensor in a paraxial area.

8. A lens assembly (400; 500; 600; 700) comprising:

an image sensor (I);
at least four plastic lenses (L1, L2, L3, L4) sequentially arranged along an optical axis (O) in a direction toward the image sensor, wherein the plastic lenses comprise a first lens (L1) having a negative refractive power, a second lens (L2) having a negative refractive power, a third lens (L3) having a refractive power, and a fourth lens (L4) having a negative refractive power; and
an aperture (Ape) disposed between the first lens and the second lens,
wherein the lens assembly satisfies Conditional Expressions 1, 3, 6, and 7 below:

[Conditional Expression 1]

$$FOV > 110 \text{ degrees}$$

[Conditional Expression 3]

$$L1\_ape/ImgH < 0.60$$

[Conditional Expression 6]

$$T3/TA > 0.34$$

[Conditional Expression 7]

$$0.7 < T3/(T1 + T2 + T4)$$

where "FOV" denotes a field of view of the lens assembly, "L1_ape" denotes an effective diameter of the first lens, "ImgH" denotes an effective image height of the image sensor, "TA" denotes a distance from an object-side surface (S1) of the first lens to a sensor-side surface (S9) of the fourth lens, "T1" denotes a thickness of the first lens, "T2" denotes a thickness of the second lens, "T3" denotes a thickness of the third lens, and "T4" denotes a thickness of the fourth lens.

9. The lens assembly of claim 8, wherein the lens assembly satisfies Conditional Expression 2 below:

[Conditional Expression 2]

$$TS/ST < 0.4$$

where "TS" denotes a distance from an object-side surface of the first lens to the aperture, and "ST" denotes a distance from the aperture to a sensor-side surface of the fourth lens.

10. The lens assembly of any one of claims 8 and 9, wherein each of the first lens, the second lens, the third lens, and the fourth lens comprises an inflection point (IP) on at least one of an object-side surface and a sensor-side surface.

11. The lens assembly of any one of claims 8 to 10, wherein the lens assembly satisfies Conditional Expression 8 below:

[Conditional Expression 8]

$$nd4 > 1.6$$

where "nd4" denotes a refractive index of the fourth lens.

12. The lens assembly of any one of claims 8 to 11, wherein the lens assembly satisfies Conditional Expression 9 below:

[Conditional Expression 9]

$$0.7 < TTL/(ImgH * 2) < 1.1$$

where "TTL" denotes a distance from an object-side surface of the first lens to an imaging plane of the image sensor.

13. The lens assembly of any one of claims 8 to 12, wherein the third lens comprises a convex object-side surface (S6) and a convex sensor-side surface (S7).

14. The lens assembly of any one of claims 8 to 13, wherein the first lens has a meniscus shape convex toward the image sensor in a paraxial area.

15. An electronic device (101; 102; 104; 300) comprising:

the lens assembly (400; 500; 600; 700) according to any one of claims 1 to 14;
a processor (120; 260); and
memory configured to store instructions that, when executed by the processor, cause the electronic device to acquire an image of a subject using the lens assembly.

FIG. 1

EP 4 625 020 A1

200

280

CAMERA MODULE

220

FLASH

210

230

IMAGE SENSOR

LENS
ASSEMBLY

240

IMAGE STABILIZER

250

MEMORY

260

IMAGE SIGNAL
PROCESSOR

# FIG. 2

FIG. 3

FIG. 4

FIG. 5

LONGITUDINAL SPHERICAL ABER.

| | |
|---|---|
| —————— | 656.2725 NM |
| – – – – – | 587.5618 NM |
| —————— | 546.0740 NM |
| ·············· | 486.1327 NM |
| —————— | 435.8343 NM |

FOCUS (UNIT:mm)

# FIG. 6

ASTIGMATIC FIELD CURVES

X    IMG HT
Y

1.91

1.44

0.96

0.48

-0.20  -0.10   0.0   0.10   0.20

FOCUS (UNIT:mm)

FIG. 7

(DISTORTION)

IMG HT

1.91

1.44

0.96

0.48

-50.0  -25.0   0.0   25.0   50.0

DISTORTION (UNIT:%)

FIG. 8

FIG. 9

LONGITUDINAL SPHERICAL ABER.

| | 656.2725 NM |
| | 587.5618 NM |
| | 546.0740 NM |
| | 486.1327 NM |
| | 435.8343 NM |

FOCUS (UNIT:mm)

FIG. 10

ASTIGMATIC FIELD CURVES

DISTORTION

FIG. 11

FIG. 12

FIG. 13

LONGITUDINAL SPHERICAL ABER.

| | 656.2725 NM |
|---|---|
| | 587.5618 NM |
| | 546.0740 NM |
| | 486.1327 NM |
| | 435.8343 NM |

FOCUS (UNIT:mm)

# FIG. 14

ASTIGMATIC FIELD CURVES

Y  X  IMG HT

DISTORTION

IMG HT

FOCUS (UNIT:mm)

DISTORTION (UNIT:%)

FIG. 15

FIG. 16

FIG. 17

LONGITUDINAL SPHERICAL ABER.

| | 656.2725 NM |
| | 587.5618 NM |
| | 546.0740 NM |
| | 486.1327 NM |
| | 435.8343 NM |

FOCUS (UNIT:mm)

FIG. 18

ASTIGMATIC FIELD CURVES

Y    X   IMG HT

1.91

1.44

0.96

0.48

-0.20   -0.10   0.0   0.10   0.20

FOCUS (UNIT:mm)

FIG. 19

DISTORTION

IMG HT

1.91

1.44

0.96

0.48

-50.0   -25.0   0.0   25.0   50.0

DISTORTION (UNIT:%)

FIG. 20

## INTERNATIONAL SEARCH REPORT

| International application No. |
|---|
| **PCT/KR2024/000911** |

### A.   CLASSIFICATION OF SUBJECT MATTER

**G02B 9/34**(2006.01)i; **G02B 13/00**(2006.01)i; **G02B 1/04**(2006.01)i; **G03B 9/02**(2006.01)i; **G02B 3/00**(2006.01)i

According to International Patent Classification (IPC) or to both national classification and IPC

### B.   FIELDS SEARCHED

Minimum documentation searched (classification system followed by classification symbols)

G02B 9/34(2006.01); G02B 11/22(2006.01); G02B 13/00(2006.01); G02B 13/18(2006.01); G02B 9/36(2006.01); G02B 9/58(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 제4 렌즈(fourth lens), 조리개(stop), 화각(field of view), 유효 상고(ImgH), 왜곡율 (distortion rate)

### C.   DOCUMENTS CONSIDERED TO BE RELEVANT

| Category* | Citation of document, with indication, where appropriate, of the relevant passages | Relevant to claim No. |
|---|---|---|
| Y | JP 2022-022065 A (AAC OPTICS (CHANGZHOU) CO., LTD.) 03 February 2022 (2022-02-03)<br>See paragraphs [0001], [0019]-[0021], [0080] and [0091], tables 9 and 15 and figure 9. | 1,3,4,6,15 |
| A | | 2,5,7-14 |
| Y | US 2012-0262804 A1 (TANG et al.) 18 October 2012 (2012-10-18)<br>See paragraph [0137] and figures 8A and 8D. | 1,3,4,6,15 |
| A | JP 2022-073869 A (AAC OPTICS SUZHOU CO., LTD.) 17 May 2022 (2022-05-17)<br>See tables 1, 5 and 17 and figures 1 and 5. | 1-15 |
| A | US 11397310 B2 (ABILITY OPTO-ELECTRONICS TECHNOLOGY CO., LTD.) 26 July 2022 (2022-07-26)<br>See table 1 and figures 1A and 1B. | 1-15 |

✓ Further documents are listed in the continuation of Box C.    ✓ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **19 April 2024** | **22 April 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2024/000911** |

| C. | DOCUMENTS CONSIDERED TO BE RELEVANT | |
| --- | --- | --- |
| Category* | Citation of document, with indication, where appropriate, of the relevant passages | Relevant to claim No. |
| A | KR 10-0849827 B1 (SAMSUNG ELECTRO-MECHANICS CO., LTD.) 31 July 2008 (2008-07-31) See table 1 and figures 1 and 2. | 1-15 |

Form PCT/ISA/210 (second sheet) (July 2022)

## INTERNATIONAL SEARCH REPORT
### Information on patent family members

International application No.

**PCT/KR2024/000911**

| Patent document cited in search report | | | Publication date (day/month/year) | Patent family member(s) | | | Publication date (day/month/year) |
|---|---|---|---|---|---|---|---|
| JP | 2022-022065 | A | 03 February 2022 | CN | 111596257 | A | 28 August 2020 |
| | | | | CN | 111596257 | B | 03 November 2020 |
| | | | | CN | 111596445 | A | 28 August 2020 |
| | | | | CN | 111596445 | B | 16 October 2020 |
| | | | | JP | 2022-022092 | A | 03 February 2022 |
| | | | | JP | 7026764 | B2 | 28 February 2022 |
| | | | | JP | 7098267 | B2 | 11 July 2022 |
| | | | | US | 11579613 | B2 | 14 February 2023 |
| | | | | US | 11644645 | B2 | 09 May 2023 |
| | | | | US | 2022-0026675 | A1 | 27 January 2022 |
| | | | | US | 2022-0026908 | A1 | 27 January 2022 |
| | | | | WO | 2022-016625 | A1 | 27 January 2022 |
| US | 2012-0262804 | A1 | 18 October 2012 | CN | 102736223 | A | 17 October 2012 |
| | | | | CN | 102736223 | B | 02 April 2014 |
| | | | | CN | 202119966 | U | 18 January 2012 |
| | | | | TW | 201241501 | A | 16 October 2012 |
| | | | | TW | I416196 | B | 21 November 2013 |
| | | | | US | 8441745 | B2 | 14 May 2013 |
| JP | 2022-073869 | A | 17 May 2022 | CN | 112230385 | A | 15 January 2021 |
| | | | | CN | 112230385 | B | 12 April 2022 |
| | | | | JP | 2022-073858 | A | 17 May 2022 |
| | | | | JP | 6926312 | B1 | 25 August 2021 |
| | | | | JP | 6935003 | B1 | 15 September 2021 |
| | | | | US | 11366293 | B2 | 21 June 2022 |
| | | | | US | 2022-0137335 | A1 | 05 May 2022 |
| | | | | WO | 2022-088348 | A1 | 05 May 2022 |
| | | | | WO | 2022-088349 | A1 | 05 May 2022 |
| US | 11397310 | B2 | 26 July 2022 | TW | 202141111 | A | 01 November 2021 |
| | | | | TW | I813874 | B | 01 September 2023 |
| | | | | US | 2021-0325637 | A1 | 21 October 2021 |
| KR | 10-0849827 | B1 | 31 July 2008 | CN | 101241226 | A | 13 August 2008 |
| | | | | CN | 101241226 | B | 08 December 2010 |
| | | | | GB | 2446489 | A | 13 August 2008 |
| | | | | GB | 2446489 | B | 31 August 2011 |
| | | | | US | 2008-0186594 | A1 | 07 August 2008 |
| | | | | US | 7777973 | B2 | 17 August 2010 |

Form PCT/ISA/210 (patent family annex) (July 2022)